# EUROPÄISCHE PATENTSCHRIFT

(11) **EP 4 214 279 B1**
(45) Veröffentlichungstag und Bekanntmachung des Hinweises auf die Patenterteilung: **04.06.2025**
(21) Anmeldenummer: 21794750.6
(22) Anmeldetag: 10.09.2021
(51) Int. Cl.: C08L 9/06, B60C 1/00

(54) **VERNETZUNGSFÄHIGE KAUTSCHUKMISCHUNG UND FAHRZEUGLUFTREIFEN**
CROSS-LINKABLE RUBBER MIXTURE AND PNEUMATIC VEHICLE TYRE
MÉLANGE DE CAOUTCHOUC RÉTICULABLE ET PNEU DE VÉHICULE

(30) Priorität: 21.09.2020 DE 102020211749
(43) Veröffentlichungstag der Anmeldung: 26.07.2023
(73) Patentinhaber: Continental Reifen Deutschland GmbH, 30175 Hannover (DE)
(72) Erfinder: FINGER, Sebastian, 30165 Hannover (DE); PETERS, Fabian, 30165 Hannover (DE); RECKER, Carla, 30165 Hannover (DE); SÀ, Catarina, 30165 Hannover (DE)
(74) Vertreter: Continental Corporation
(86) Internationale Anmeldenummer: PCT/DE2021/200122
(87) Internationale Veröffentlichungsnummer: WO 2022/057986

(56) Entgegenhaltungen:
- EP-A1- 1 529 806
- WO-A1-2020/158237
- US-B1- 6 525 133

## Beschreibung

Die Erfindung betrifft eine vernetzungsfähige Kautschukmischung sowie einen Fahrzeugluftreifen mit zumindest einem aus Gummi bestehenden, zumindest zum Teil aus dieser Kautschukmischung gefertigten Reifenbauteil.

Um die physikalischen Eigenschaften von aus Kautschukmischungen gefertigten Vulkanisaten, aus welchen beispielsweise Bestandteile von Fahrzeugluftreifen oder technischen Gummiartikeln, wie Gurten, Riemen und Schläuchen, bestehen, zu optimieren, ist es bekannt, die Mischungsbestandteile der Kautschukmischungen zu variieren. Häufig lässt sich durch Variation eines Mischungsbestandteiles eine Vulkanisateigenschaft verbessern, wobei gleichzeitig eine Verschlechterung einer anderen Vulkanisateigenschaft auftritt, sodass zwischen diesen Vulkanisateigenschaften ein Zielkonflikt vorliegt. Ein solcher Zielkonflikt liegt bei Laufstreifen von Fahrzeugluftreifen zwischen dem Rollwiderstand, den Nassgriffeigenschaften und der Abriebfestigkeit vor.

Zur Beeinflussung des Rollwiderstandes, der Nassgriffeigenschaften und der Abriebfestigkeit von Laufstreifen ist es beispielsweise bekannt, in der bzw. den zugrundeliegenden Kautschukmischung(en) Styrol-Butadien-Kautschuke mit unterschiedlicher Mikrostruktur oder modifizierte Styrol-Butadien-Kautschuke einzusetzen. Insbesondere werden bei den Styrol-Butadien-Kautschuken der Styrol- und der VinylAnteil variiert, die Endgruppen modifiziert oder Kopplungen oder Hydrierungen vorgenommen.

Aus der EP 2 060 604 B 1 ist beispielsweise eine insbesondere für einen Laufstreifen eines Fahrzeugluftreifens vorgesehene Kautschukmischung bekannt, welche einen Füllstoff und einen niedermolekularen Dien-Kautschuk mit einer mittleren molaren Masse M_{W} (Massenmittel der Molmasse) von 2.000 g/mol bis 150.000 g/mol und einem Gehalt an aromatischen Vinylverbindungen von weniger als 5% enthält. Ein aus einer derartigen Kautschukmischung gefertigter Laufstreifen soll einen geringen Rollwiderstand aufweisen.

Aus der WO 2018/191187 A1 ist ferner eine Kautschukmischung bekannt, welche ein funktionalisiertes Harz mit einem polaren Linker enthält. Die Kautschukmischung wird beispielsweise bei der Herstellung eines Schlauches, einer Dichtung, eines Gürtels, einer Schuhsole oder eines Reifenbauteils, insbesondere eines Laufstreifens oder einer Seitenwand, eingesetzt.

Die EP 1529806 A1 offenbart eine Kautschukmischung für Laufstreifen von Reifen, die ein flüssiges Polymer mit einer Glasübergangstemperatur T_{g} von weniger als -15 °C enthält. Mit den bisher bekannten Kautschukmischungen ist es noch nicht gelungen, den bei Laufstreifen von Fahrzeugluftreifen auftretenden Zielkonflikt zwischen geringem Rollwiderstand, guten Nassgriffeigenschaften und hoher Abriebfestigkeit auf zufriedenstellende Weise zu lösen.

Der Erfindung liegt daher die Aufgabe zugrunde, eine Kautschukmischung für einen Laufstreifen eines Fahrzeugluftreifens bereitzustellen, mittels welcher der zwischen dem Rollwiderstand, den Nassgriffeigenschaften und der Abriebfestigkeit bestehende Zielkonflikt auf bessere Weise als bisher gelöst wird.

Dies erfolgt gemäß der Erfindung durch eine vernetzungsfähige Kautschukmischung enthaltend:
a) einen Dienkautschuk mit einer mittleren molaren Masse von mehr als 150.000 g/mol,
b) einen Füllstoff,
c) ein Poly- oder Oligomer mit einer mittleren molaren Masse Mn von kleiner 150.000 g/mol, welches eine füllstoffwechselwirkende funktionelle Gruppe und eine Glasübergangstemperatur T_{g} < -15°C aufweist,
d) ein Poly- oder Oligomer mit einer mittleren molaren Masse Mn von kleiner 150.000 g/mol, welches eine füllstoffwechselwirkende funktionelle Gruppe und eine Glasübergangstemperatur Tg > -15°C aufweist,

wobei die zwischen der Glasübergangstemperatur T_{g} des Poly- oder Oligomers gemäß Merkmal c) und der Glasübergangstemperatur T_{g} des Poly- oder Oligomers gemäß Merkmal d) ermittelte Temperaturdifferenz ΔT_{g} mindestens 5°C beträgt,
wobei die füllstoffwechselwirkenden funktionellen Gruppen eine Wechselwirkung des Poly- oder Oligomers über Van-der-Waals-, Dipol-Dipol- oder elektrostatische Wechselwirkungen oder über kovalente bzw. nicht-kovalent Bindungen, wie beispielsweise Wasserstoffbrückenbindungen, mit der Füllstoffoberfläche bewirken.

In einer solcher Kautschukmischung treten die mit einer füllstoffwechselwirkenden funktionellen Gruppe versehenen Mischungsbestandteile, nämlich die Komponenten c) und d), verstärkt mit dem Füllstoff in Wechselwirkung und kreieren eine Grenzfläche zwischen dem Poly- bzw. Oligomer und dem Füllstoff. Durch die Kombination von füllstoffwechselwirkender Poly- und/oder Oligomeren mit verschiedenen Glasübergangstemperaturen wird diese Grenzfläche in ihren Eigenschaften optimiert, insbesondere in einer auf den jeweiligen Anwendungsfall der Kautschukmischung abgestimmten Weise. In diesseits durchgeführten Versuchsreihen (siehe unten), hat sich überraschender Weise herausgestellt, dass aus solchen Kautschukmischungen gefertigte Laufstreifen bzw. Laufstreifenteile vorteilhafte Nassgriffeigenschaften (Verlustfaktor tan d bei 0°C als Nassgriffindikator) und einen geringen Rollwiderstand (Verlustfaktor tan d bei 70°C als Rollwiderstandsindikator) erwarten lassen, wobei sie weiterhin eine unverändert gute Abriebfestigkeit aufweisen.

Gemäß einer bevorzugten Ausführung enthält die Kautschukmischung als Füllstoff Kieselsäure und/oder Ruß.

Gemäß einer weiteren bevorzugten Ausführung ist das Poly- oder Oligomer gemäß Merkmal c) ein dienbasiertes Poly- oder Oligomer.

Gemäß einer weiteren bevorzugten Ausführung weist das Poly- oder Oligomer gemäß Merkmal c) eine Glasübergangstemperatur T_{g} von < -20°C, insbesondere von < -30°C, auf.

Gemäß einer weiteren bevorzugten Ausführung weist das Poly- oder Oligomer gemäß Merkmal c) eine mittlere molare Masse Mn (Zahlenmittel der molaren Masse gemäß

Gelpermeations-Chromatographie) von 500 g/mol bis 50.000 g/mol, insbesondere von 1.000 g/mol bis 20.000 g/mol, besonders bevorzugt von 3.000 g/mol bis 15.000 g/mol, auf.

Eine weitere bevorzugten Ausführung ist dadurch gekennzeichnet, dass das Poly- oder Oligomer gemäß Merkmal c) mit einer Silyl-Schutzgruppe funktionalisiert ist.

Ferner ist es bevorzugt, wenn das Poly- oder Oligomer gemäß Merkmal c) ein mit einer füllstoffwechselwirkenden funktionellen Gruppe funktionalisiertes Polybutadien ist.

Ferner ist es bevorzugt, wenn das Poly- oder Oligomer gemäß Merkmal c) und/oder das Poly- oder Oligomer gemäß Merkmal d) mit einer Silyl-Schutzgruppe der Formel IV funktionalisiert ist:

(R¹R²R³)Si- Formel IV

wobei
R¹, R², R³ unabhängig voneinander ausgewählt sind aus der Gruppe lineare oder verzweigten Alkoxy-, Cycloalkoxy,- Alkyl-, Cycloalkyl-, Aryl- oder Hydroxygruppen, jeweils mit 1 bis 20 Kohlenstoffatomen, oder Wasserstoff und
wobei die Silyl-Schutzgruppe gemäß Formel IV direkt oder über eine Brücke an die Polymerkette des Poly- bzw. Oligomers angebunden ist und
wobei die Brücke aus einem gesättigten oder ungesättigten Kohlenwasserstoffrest, welcher Heteroatome, insbesondere Schwefel und/oder Stickstoff, enthalten kann, gebildet ist.

Ferner ist es bevorzugt, wenn das Poly- oder Oligomer gemäß Merkmal d) mit einer Silyl-Schutzgruppe der Formel V funktionalisiert ist:

-[Zₖ-Xₙ-R⁴-(CH₂)ₘ-Si(R⁵)ₚ]_{q} Formel V

wobei
- Z für eine aromatische oder aliphatische Gruppe ggf. mit einem oder mehreren Heteroatom(en),
- X für einen Linker, enthaltend Schwefel und/oder Sauerstoff und/oder Stickstoff und/oder eine Carbonylgruppe,
- R⁴ für ein oder mehrere aliphatische Gruppen mit 1 bis 18 Kohlenstoffatomen und/oder eine Verbindungsgruppe mit zumindest einem Heteroatom, insbesondere mit Sauerstoff, Stickstoff oder Schwefel,
- R⁵ für eine verzweigte oder unverzweigte Alkoxy-, Aryloxy-, Alkyl- oder Arylgruppe mit 1 bis 18 Kohlenstoffatomen, Wasserstoff oder eine Hydroxygruppe, wobei zumindest ein R⁵ eine Alkoxy- oder eine Aryloxygruppe mit 1 bis 18 Kohlenstoffatomen, ein Wasserstoffatom oder einer Hydroxygruppe ist, wobei R⁵ innerhalb des Moleküls gleich oder verschieden ist,
- q für eine ganze Zahl ≥ 1,
- k für 0 oder 1,
- n für eine ganze Zahl zwischen 1 und 10,
- m für eine ganze Zahl zwischen 0 und 10 und
- p für 1, 2 oder 3
steht.

Ferner ist es bevorzugt, wenn das Poly- oder Oligomer gemäß Merkmal d) ein Harz ist, welches auf ungesättigten aliphatischen Monomeren, ungesättigten aromatischen Monomeren, Terpenen, Kollophonium, ungesättigten cycloaromatischen Monomeren, ungesättigten cycloaliphatischen Monomeren, ungesättigten Fettsäuren, Methacrylaten und/oder vinylaromatischen Monomeren basiert.

Ferner ist es bevorzugt, wenn das Poly- oder Oligomer gemäß Merkmal d) eine molare Masse (Mn) von 200 g/mol bis 150.000 g/mol, bevorzugt von 200 g/mol bis 50.000 g/mol, besonders bevorzugt von 200 g/mol bis 30.000 g/mol aufweist.

Ferner ist es bevorzugt, wenn das Poly- oder Oligomer gemäß Merkmal c) und das Poly- oder Oligomer gemäß Merkmal d) in einem Verhältnis von 1:50 bis 50:1, insbesondere von 1:10 bis 10:1, vorzugsweise von 1:5 bis 5:1, und besonders bevorzugt von 1:3 bis 3:1, enthalten sind.

Ferner ist es bevorzugt, wenn die zwischen der Glasübergangstemperatur T_{g} des Poly- oder Oligomers gemäß Merkmal c) und der Glasübergangstemperatur T_{g} des Poly- oder

Oligomers gemäß Merkmal d) ermittelte Temperaturdifferenz ΔT_{g} mindestens mindestens 10°C beträgt.

Ferner ist es bevorzugt, wenn die Kautschukmischung zumindest ein Silan-Kupplungsagens enthält. Durch das Silan-Kupplungsagens kann der Füllstoff verstärkt mit den Poly- bzw. Oligomeren wechselwirken.

Die Erfindung betrifft ferner einen Fahrzeugluftreifen, welcher zumindest einen aus Gummi bestehenden Reifenbauteil, insbesondere einen Laufstreifen, aufweist, der zumindest zum Teil aus einer Kautschukmischung gemäß einem der Ansprüche 1 bis 13 gefertigt wurde. Ein solcher Laufstreifen weist gute Nassgriffeigenschaften, einen geringen Rollwiderstand sowie eine hohe Abriebfestigkeit auf. Insbesondere ist der ansonsten zwischen diesen Eigenschaften bestehende Zielkonflikt besonders günstig gelöst.

Weitere Merkmale, Vorteile und Einzelheiten der Erfindung werden nun anhand von Versuchsreihen, welche Ausführungsbeispiele der Erfindung umfassen und in Tabellen zusammengefasst sind, näher erläutert.

Die Erfindung befasst sich mit einer Kautschukmischung, welche zur Fertigung eines Reifenbauteils oder eines Bestandteiles eines Reifenbauteils, insbesondere eines Laufstreifens bzw. einer Laufstreifenschicht, besonders gut geeignet ist. Im Rahmen der Versuchsreihen wurden Kautschukmischungen hergestellt und im Hinblick auf bestimmte Vulkanisateigenschaften untersucht. Gemäß der Erfindung ausgeführte Kautschukmischungen wurden mit Vergleichs-Kautschukmischungen (Referenz-Kautschukmischungen) verglichen.

### Herstellung der Kautschukmischungen:

Die Herstellung der Kautschukmischungen erfolgte unter den üblichen Bedingungen in mehreren Stufen in einem Labormischer (300 mL, Brabender Mixer, CW Brabender GmbH & Co., South Hackensack, NJ, US). Im Zuge einer ersten Mischstufe (Grundmischstufe) wurden sämtliche Mischungsbestandteile der jeweiligen Kautschukmischung, mit Ausnahme von zumindest einigen Mischungsbestandteilen des Vernetzungssystems, insbesondere mit Ausnahme von Schwefel und Beschleuniger, vermischt. Durch Einmischen des Vernetzungssystems bzw. der noch fehlenden Bestandteile des Vernetzungssystems wurde in einer weiteren Mischstufe (Fertigmischstufe) die fertige Kautschukmischung (Fertigmischung) erhalten. Tabelle 1 enthält die Mischparameter, also die Bedingungen unter welchen die Kautschukmischungen hergestellt wurden. Für die Temperaturen gelten die üblichen Toleranzbereiche von +/- 3°C.

**Tabelle 1: Mischparameter**

| *Erste Mischstufe* | |
|---|---|
| Rotorgeschwindigkeit [Umdrehungen / Minute] | 70 |
| Starttemperatur [°C] | 130 |
| Endtemperatur [°C] | 149 |

| *Zweite Mischstufe* | |
|---|---|
| Rotorgeschwindigkeit [Umdrehungen / Minute] | 55 |
| Temperatur [°C] | 80 |

### Vulkanisatprüfungen:

Aus sämtlichen Kautschukmischungen wurden genormte, vulkanisierte Prüfkörper (Vulkanisationsbedingungen: Zeit = 20 min, Temperatur = 160°C) hergestellt, mit welchen einige typische Vulkanisateigenschaften bestimmt wurden. Folgende Vulkanisatprüfungen wurden durchgeführt:
- Shore A-Härte bei Raumtemperatur (25°C) mittels Durometer gemäß DIN ISO 7619-1,
- Verlustfaktor tan d (tan δ) bei 0°C und bei 70°C aus temperaturabhängiger dynamisch-mechanischer Messung mittels Eplexor gemäß DIN 53 513 (konstante Kraft, 10% compression, ±0,2% strain amplitude, Frequenz 10 HZ),
- Abriebtest bei Raumtemperatur (25°C) gemäß DIN ISO 4649

Diese Vulkanisateigenschaften erlauben es, Rückschlüsse über zu erwartende Eigenschaften zu ziehen, welche ein aus einer solchen Kautschukmischung gefertigter Laufstreifen bzw. eine aus einer solchen Kautschukmischung gefertigte radial äußerste Laufstreifenschicht, welche beim Fahren mit dem Untergrund in Kontakt tritt, aufweist.

Die Shore A-Härte ist insbesondere ein Maß für die Steifigkeit der Vulkanisate.

Der Verlustfaktor tan d bei 0°C dient als Indikator für den Nassgriff eines Reifens. Je höher der Verlustfaktor tan d bei 0°C ist, desto besser sind die Nassgriffeigenschaften.

Der Verlustfaktor tan d bei 70°C dient als Indikator für den Rollwiderstand eines Reifens, wobei ein kleinerer Verlustfaktor tan d bei 70°C einen geringeren Rollwiderstand bedeutet.

Beim Abriebtest wird ein entsprechend genormter Prüfkörper abgerieben und der Abrieb (Menge an abgeriebenem Material) in mm³ bestimmt. Je kleiner der Wert für den Abrieb ist, desto höher (besser) ist die Abriebfestigkeit.

### Durchgeführte Versuchsreihen:

Es wurden mehrere Versuchsreihen durchgeführt, bei welchen die Auswirkungen von speziellen Mischungsbestandteilen auf die erwähnten Vulkanisateigenschaften untersucht wurden. Zu diesen speziellen Mischungsbestandteilen gehören Harze, welche an einer Seitengruppe oder endständig mit einer Silyl-Schutzgruppe ((R¹R²R³)Si-) funktionalisiert sind, sowie Polybutadiene, welche endständig mit einer Silyl-Schutzgruppe funktionalisiert sind. Im Nachfolgenden wird im Zusammenhang mit den Versuchsreihen nicht mehr explizit auf die Silyl-Schutzgruppe verwiesen, sodass unter einem "an einer Seitengruppe funktionalisiertem Harz" ein an einer Seitengruppe mit einer Silyl-Schutzgruppe funktionalisiertes Harz, unter einem "endständig funktionalisiertem Harz" ein endständig mit einer Silyl-Schutzgruppe funktionalisiertes Harz und unter "endständig funktionalisiertem flüssigen Polybutadien" ein endständig mit einer Silyl-Schutzgruppe funktionalisiertes, flüssiges Polybutadien verstanden wird.

Zur Quantifizierung der Funktionalisierung ist nachfolgend teilweise der Stoffmengenanteil angegeben, welcher mit Silyl-Schutzgruppen funktionalisiert ist. Der Stoffmengenanteil bezieht sich dabei auf die konstitutionelle Repetiereinheit (Wiederholeinheit), welche bekannter Weise die kleinste sich wiederholende Einheit innerhalb eines Polymers ist.

In der nachfolgenden Beschreibung sowie in den Tabellen erfolgen die Mengenangaben der Bestandteile der Kautschukmischungen in der in der Kautschuktechnologie üblichen Einheit phr (parts per hundred parts of rubber by weight). Die Mengenangaben beziehen sich dabei jeweils auf die Massenteile des Grundpolymers bzw. bei Polymerblends auf jene der Grundpolymere.

In den Tabellen der Versuchsreihen, welche die Zusammensetzungen der Kautschukmischungen angeben, sind bei einigen Mischungsbestandteilen in Klammer die zugehörigen, aktuellen Handelsbezeichnungen (Stand Oktober 2019) angegeben. Die Versuchsreihen umfassen Beispiele für erfindungsgemäße Kautschukmischungen E1 bis E19 sowie Referenz-Kautschukmischungen R1 bis R10.

### 1. Versuchsreihe - Variation der Harzmenge

Tabelle 2.1 zeigt die Zusammensetzungen der Kautschukmischungen der 1.Versuchsreihe In der 1.Versuchsreihe wurden die grundsätzlichen Auswirkungen von endständig funktionalisiertem flüssigen Polybutadien (BR) in Kombination mit einem endständig funktionalisierten Harz untersucht (zugehörige Mengenangaben in Tabelle 2.1 grau hinterlegt).

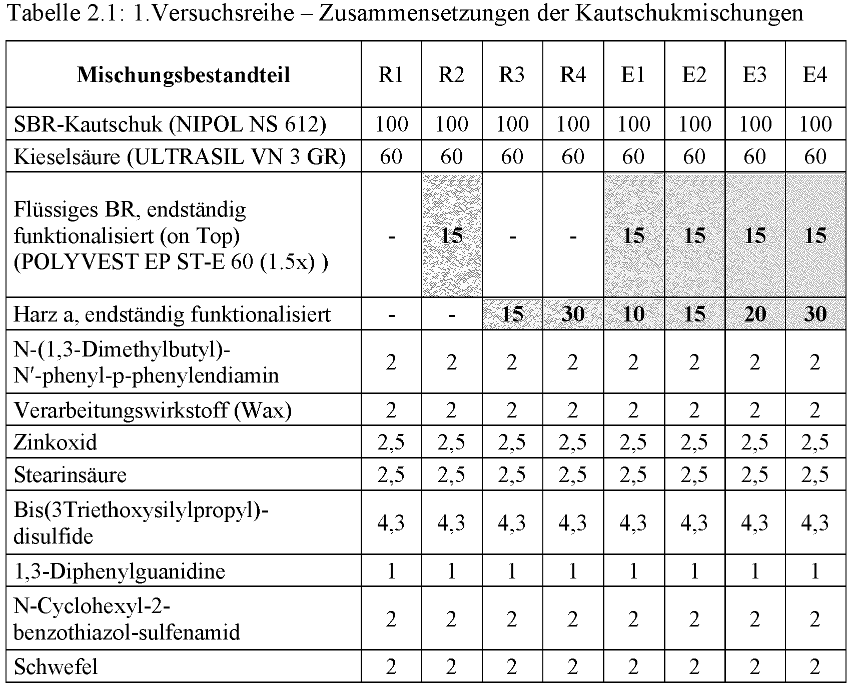

Sämtliche Kautschukmischungen der 1.Versuchsreihe enthalten als Grundpolymer einen SBR-Kautschuk und als Füllstoff eine Kieselsäure.

Das endständig funktionalisierte, flüssige Polybutadien wird nicht zu den Grundpolymeren gezählt, es ist zusätzlich zum Grundpolymer (SBR-Kautschuk) enthalten ("on top").

Das endständig funktionalisierte Harz a ist ein Harz auf α-Methylsytrol - Basis, bei welchem ein Stoffmengenanteil von 10% mit Silyl-Schutzgruppen funktionalisiert ist. Harz a wurde gemäß Beispiel 1.2 der WO 2018/191187 A1 (Absatz [0229] bis [0231]) synthetisiert und weist eine mittlere molare Masse Mn (Zahlenmittel der molaren Masse gemäß Gelpermeations-Chromatographie) von 699 g/mol auf. Harz a war in den Kautschukmischungen E1 bis E4 in einer Menge von 10 phr, 15 phr, 20 phr bzw. 30 phr enthalten.

Formel I zeigt die Strukturformel von Harz a.

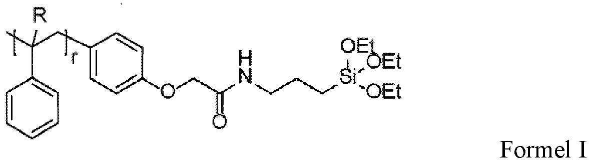

Ferner sind ein Silan (Bis(3Triethoxysilylpropyl)-disulfide), also ein Silan-Kupplungsagens, und ein für die Schwefelvernetzung geeigneter Schwefel oder Schwefelspender enthalten. Zu den weiteren Mischungsbestandteilen gehören zwei Beschleuniger (N-Cyclohexyl-2-benzothiazol-sulfenamid und 1,3-Diphenylguanidine), zwei Aktivatoren (Stearinsäure, Zinkoxid), ein Verarbeitungswirkstoff und ein Altersschutz (N-(1,3-Dimethylbutyl)-N'-phenyl-p-phenylendiamin).

Tabelle 2.2 zeigt die Ergebnisse der durchgeführten Vulkanisatprüfungen für die Kautschukmischungen aus Tabelle 2.1.

**Tabelle 2.2: 1.Versuchsreihe - Vulkanisatprüfungen**

| **Vulkanisateigenschaft** | R1 | R2 | R3 | R4 | E1 | E2 | E3 | E4 |
|---|---|---|---|---|---|---|---|---|
| Härte Shore A (T= 25°C) | 70,1 | 66,2 | 65,4 | 66,9 | 67,6 | 67,4 | 68,2 | 66,7 |
| tan d (0°C) | 0,203 | 0,144 | 0,298 | 0,347 | 0,210 | 0,233 | 0,265 | 0,331 |
| tan d (70°C) | 0,112 | 0,078 | 0,122 | 0,161 | 0,087 | 0,082 | 0,088 | 0,091 |
| Abrieb [mm³] | 100 | 98 | 126 | 142 | 104 | 109 | 111 | 126 |

Wie ein Vergleich der Vulkanisate aus R1 und R2 zeigt, führt der alleinige Einsatz von endständig funktionalisiertem flüssigen Polybutadien (R2) zu einem kleineren Verlustfaktors tan d (0°C) (Nassgriffindikator) und zu einem kleineren Verlustfaktor tan d (70°C) (Rollwiderstandsindikator). Folglich weist ein aus der Referenz-Kautschukmischung R2 gefertigter Laufstreifen - im Vergleich zu einem aus der Referenz-Kautschukmischung R1 gefertigten Laufstreifen - schlechtere Nassgriffeigenschaften und einen geringeren (verbesserten) Rollwiderstand auf. Die Abriebfestigkeiten der Vulkanisate aus R1 und R2 und damit auch der entsprechenden Laufstreifen sind ähnlich (100 vs. 98).

Ein Vergleich der Vulkanisate aus R1 und R3 zeigt, dass der alleinige Einsatz von endständig funktionalisiertem Harz (R3) zu einem größeren Verlustfaktors tan d (0°C) (Nassgriffindikator) und zu einem größeren Verlustfaktor tan d (70°C) (Rollwiderstandsindikator) führt. Ein aus der Referenz-Kautschukmischung R3 gefertigter Laufstreifen weist daher - im Vergleich zu einem aus der Referenz-Kautschukmischung R1 gefertigten Laufstreifen - bessere Nassgriffeigenschaften und einen größeren (verschlechtern) Rollwiderstand auf. Die Abriebfestigkeit des Vulkanisates aus R3 ist deutlich schlechter als die Abriebfestigkeit des Vulkanisates aus R1 (126 vs. 100).

Wie das Vulkanisat aus R4 im Vergleich zu den Vulkanisaten aus R3 und R1 zeigt, lässt sich durch Einsatz größerer Mengen von endständig funktionalisiertem Harz (R4) der Verlustfaktors tan d (0°C) (Nassgriffindikator) weiter erhöhen, jedoch ist auch der Verlustfaktor tan d (70°C) (Rollwiderstandsindikator) deutlich erhöht. Ein aus der Referenz-Kautschukmischung R4 gefertigter Laufstreifen weist daher sehr gute Nassgriffeigenschaften, aber einen sehr großen (deutlich verschlechterten) Rollwiderstand auf. Außerdem weist das Vulkanisat aus R4 einen sehr hohen und daher schlechten Abriebwert auf (142 vs. 126 bzw. 100).

Die Vulkanisate aus den erfindungsgemäßen Kautschukmischungen E1 bis E4 weisen einen höheren Verlustfaktor tan d (0°C) (Nassgriffindikator) als die Vulkanisate aus den Referenz-Kautschukmischungen R1 und R2 sowie einen geringeren Verlustfaktor tan d (70°C) (Rollwiderstandsindikator) als die Vulkanisate der Referenz-Kautschukmischungen R1, R3, R4 auf. Ein aus den erfindungsgemäßen Kautschukmischungen E1 bis E4 gefertigter Laufstreifen weist daher - im Vergleich zu einem aus der Referenz-Kautschukmischung R1, R2 gefertigten Laufstreifen - bessere Nassgriffeigenschaften und - im Vergleich zu einem aus der Referenz-Kautschukmischung R1, R3, R4 gefertigten Laufstreifen - einen deutlich geringen (verbesserten) Rollwiderstand auf. Die Abriebfestigkeiten der Vulkanisate aus E1 bis E4 sind gegenüber der Abriebfestigkeit der Vulkanisate aus R3 und R4 teils deutlich verbessert.

Aus der 1.Versuchsreihe folgt, dass die Vulkanisate aus den erfindungsgemäßen Kautschukmischungen E1 bis E4 (enthalten endständig funktionalisiertes flüssiges Polybutadien in Kombination mit einem endständig funktionalisierten Harz) verbesserte Nassgriffeigenschaften und einen verbesserten Rollwiderstandswert liefern, ohne im Hinblick auf ihre Abriebfestigkeit einzubüßen.

### 2. Versuchsreihe - Linker des Harzes

In einer 2.Versuchsreihe wurden die Auswirkungen eines weiteren endständig funktionalisierten Harzes (Harz b), welches sich von dem in der 1.Versuchsreihe verwendeten endständig funktionalisiertem Harz a durch den Linker unterscheidet, untersucht.

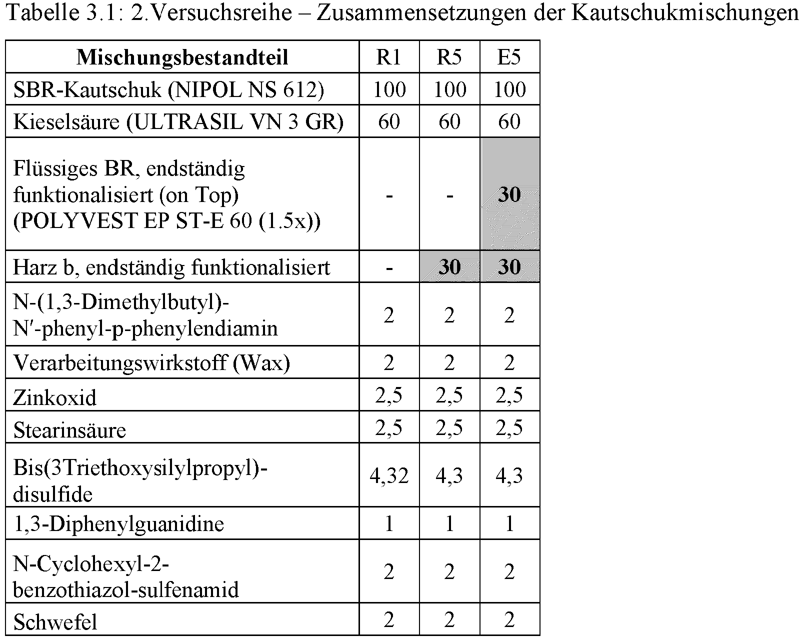

Das endständig funktionalisierte Harz b ist ein Harz auf α-Methylsytrol - Basis, bei welchem ein Stoffmengenanteil von 10% mit Silyl-Schutzgruppen funktionalisiert ist. Harz b wurde gemäß Beispiel 1.9 der WO 2018/191187 A1 (Absatz [0248] bis [0249]) synthetisiert und weist eine mittlere molare Masse Mn von 775 g/mol auf.

Formel II zeigt die Strukturformel von Harz b.

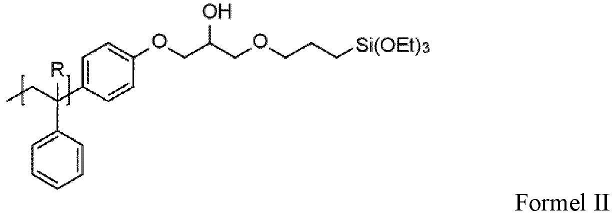

**Tabelle 3.2: 2.Versuchsreihe - Vulkanisatprüfungen**

| **Vulkanisateigenschaft** | R1 | R5 | E5 |
|---|---|---|---|
| Härte Shore A (T= 25°C) | 70,1 | 62,9 | 66,7 |
| tan d (0°C) | 0,203 | 0,330 | 0,346 |
| tan d (70 °C) | 0,112 | 0,117 | 0,098 |
| Abrieb [mm³] | 100 | 148 | 117 |

Das Vulkanisat aus E5 weist jeweils verglichen mit dem Vulkanisat aus R1 bzw. R5 einen größeren Verlustfaktors tan d (0°C) (Nassgriffindikator) und einen kleineren Verlustfaktor tan d (70°C) (Rollwiderstandsindikator) auf. Ein aus der erfindungsgemäßen Kautschukmischung E5 gefertigter Laufstreifen weist daher - im Vergleich zu einem aus der Referenz-Kautschukmischung R1 bzw. R5 gefertigten Laufstreifen - bessere Nassgriffeigenschaften und einen geringeren (verbesserten) Rollwiderstand auf. Die Abriebfestigkeit ist gegenüber dem Vulkanisat aus R5 deutlich verbessert.

Aus der 2.Versuchsreihe folgt, dass sich die vorteilhaften Vulkanisateigenschaften unabhängig von der Struktur des Linkers des Harzes erzielen lassen.

### 3.Versuchsreihe - Basis des Harzes und Position der Funktionalisierung des Harzes

In einer 3. Versuchsreihe wurde gezeigt, dass sich die vorteilhaften Wirkungen auch mit an einer Seitengruppe funktionalisierten Harzen sowie mit Harzen, welche eine von den Harzen der 1. und 2 Versuchsreihe abweichende Basis (in 1. und 2. Versuchsreihe α-Methylsytrol - Basis) aufweisen, erzielen lassen. Tabelle 4.1 enthält die zugehörigen Zusammensetzungen der Kautschukmischungen.

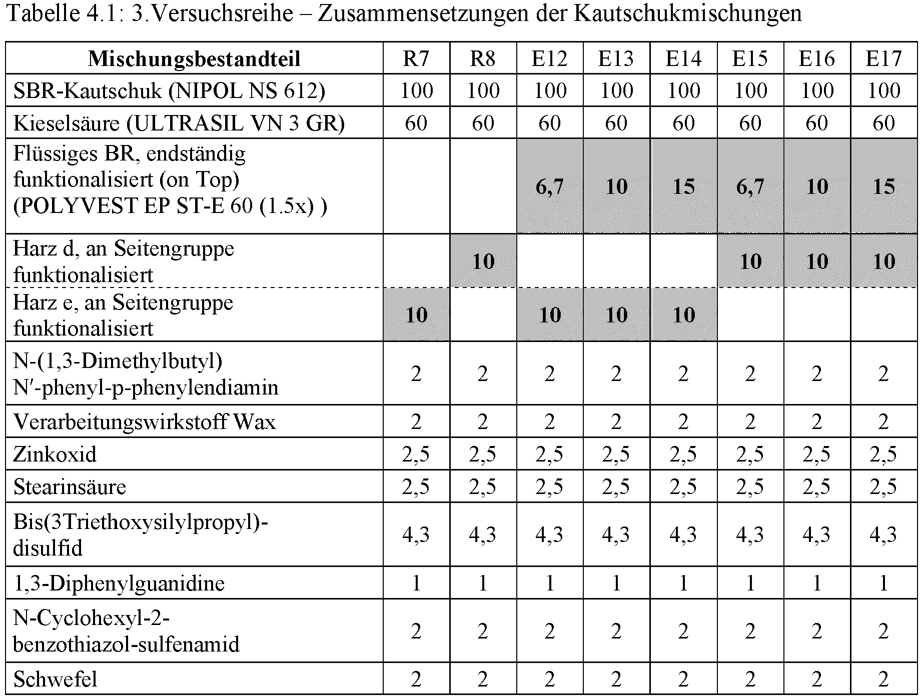

Das an einer Seitengruppe funktionalisierte Harz d ist ein Harz auf α-Methylsytrol - Basis, bei welchem ein Stoffmengenanteil von 10% mit Silyl-Schutzgruppen funktionalisiert ist. Harz d wurde gemäß Beispiel 1.4 der WO 2018/191187 A1 (Absatz [0235] bis [0237]) synthetisiert und weist eine mittlere molare Masse Mn von 534 g/mol auf.

Das an einer Seitengruppe funktionalisierte Harz e ist ein Harz auf Methacrylat - Basis, bei welchem ein Stoffmengenanteil von 10% mit Silyl-Schutzgruppen funktionalisiert ist. Harz e wurde gemäß Beispiel 1.8 der WO 2018/191187 A1 (Absatz [0246] und [0247]) synthetisiert und weist eine mittlere molare Masse Mn von 876 g/mol auf.

**Tabelle 5.2: 3.Versuchsreihe - Vulkanisatprüfungen**

| **Vulkanisateigenschaft** | R7 | R8 | E12 | E13 | E14 | E15 | E16 | E17 |
|---|---|---|---|---|---|---|---|---|
| Härte Shore A (T= 25°C) | 70,9 | 70 | 70,2 | 70,2 | 70,8 | 69 | 67,6 | 67,2 |
| tan d (0°C) | 0,233 | 0,249 | 0,247 | 0,228 | 0,231 | 0,244 | 0,248 | 0,276 |
| tan d (70 °C) | 0,093 | 0,116 | 0,097 | 0,088 | 0,088 | 0,104 | 0,098 | 0,112 |
| Abrieb [mm³] | 108 | 114 | 89 | 98 | 96 | 88 | 84 | 83 |

Die Vulkanisate aus E12 bis E14 (zugehörige Kautschukmischungen enthalten endständig funktionalisierten flüssiges Polybutadien und an Seitengruppen funktionalisiertes Harz auf Methacrylat - Basis) zeigen im Vergleich zum Vulkanisat aus R7 (zugehörige Kautschukmischung enthält "nur" an Seitengruppen funktionalisiertes Harz auf Methacrylat - Basis) eine deutlich Verbesserung im Abrieb (89 bzw. 98 bzw. 96 vs. 108), wobei der Verlustfaktor tan d (0°C) (Nassgriffindikator) und der Verlustfaktor tan d (70°C) (Rollwiderstandsindikator) erhalten bleiben.

Die Vulkanisate aus E15 bis E17 (zugehörige Kautschukmischungen enthalten endständig funktionalisierten flüssiges Polybutadien und an Seitengruppe funktionalisiertes Harz auf α-Methylsytrol - Basis) zeigen im Vergleich zum Vulkanisat aus R8 (zugehörige Kautschukmischung enthält "nur" an Seitengruppen funktionalisiertes Harz auf α-Methylsytrol - Basis) einen kleineren tan d (70°) (d.h. verringerter Rollwiderstand für Laufstreifen) und einen deutlich verbesserten Abrieb (88 bzw. 84 bzw. 83 vs 114).

Aus der 3.Versuchsreihe folgt, dass sich die vorteilhaften Vulkanisateigenschaften, insbesondere die Abriebfestigkeit, unabhängig von der Position (Seitengruppe, Endgruppe) der Funktionalisierung des Harzes und unabhängig von der Basis des Harzes erzielen lassen.

### 4.Versuchsreihe - Polybutadienmenge, Polybutadientyp, Harze mit unterschiedlicher molarer Masse und verschiedenen Funktionalisierungspositionen

In einer 4.Versuchsreihe wurden die Auswirkungen unterschiedlicher Mengen von endständig funktionalisiertem, flüssigem Polybutadien untersucht, wobei sowohl das bereits erwähnte POLYVEST EP ST-E 60 als auch "Ricon 603" untersucht wurden. Ricon 603 unterscheidet sich von POLYVEST EP ST-E 60 in seiner Glasübergangstemperatur T_{g}, seinem Vinylanteil und im Verhältnis von cis- zu trans-Isomeren (cis/trans ratio). Es wurden das bereits erwähnte endständig funktionalisierte Harz b (Mn von 775 g/mol) sowie ein an einer Seitengruppe funktionalisiertes Harz c verwendet.

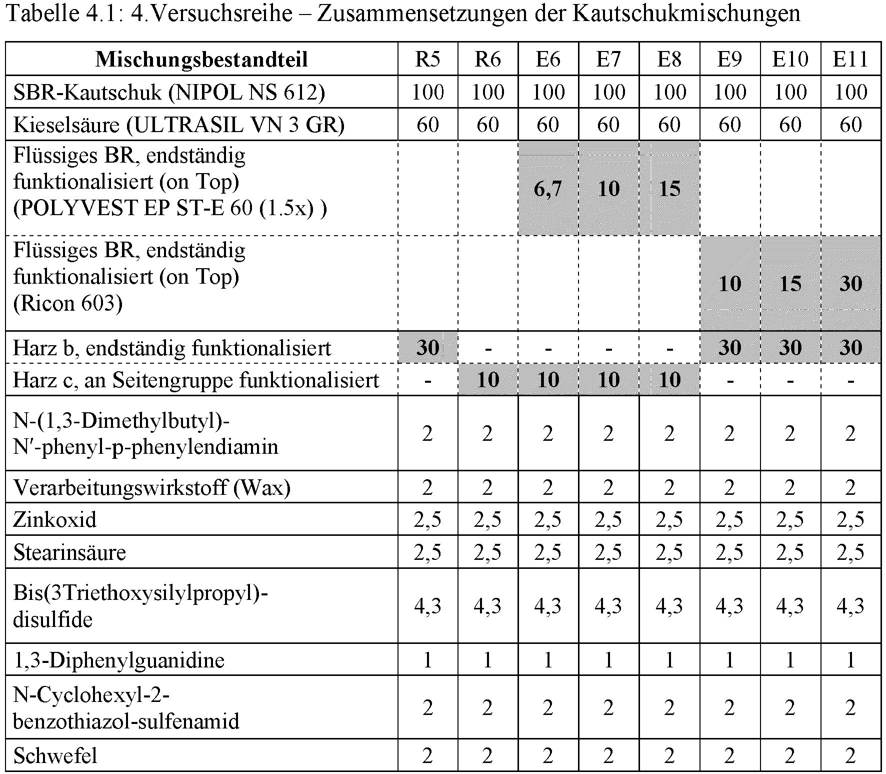

Das an einer Seitengruppe funktionalisierte Harz c wurde durch radikalische Copolymerisation gemäß Beispiel 1.5 der WO 2018/191187 A1 (Absatz [0238] bis [0241) synthetisiert und weist eine mittlere molare Masse Mn von 5320 g/mol auf.

Formel III zeigt die Strukturformel von Harz c.

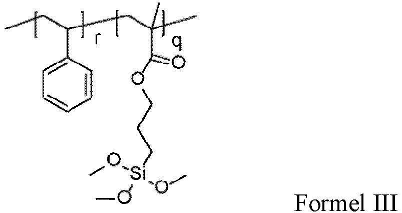

**Tabelle 4.2: 4.Versuchsreihe - Vulkanisatprüfungen**

| **Vulkanisateigenschaft** | R5 | R6 | E6 | E7 | E8 | E9 | E10 | E11 |
|---|---|---|---|---|---|---|---|---|
| Härte Shore A (T= 25°C) | 62,9 | 66,2 | 67,6 | 67,4 | 68,2 | 63,9 | 65 | 66,1 |
| tan d (0°C) | 0,330 | 0,252 | 0,234 | 0,217 | 0,203 | 0,340 | 0,343 | 0,378 |
| tan d (70°C) | 0,117 | 0,119 | 0,099 | 0,094 | 0,085 | 0,084 | 0,075 | 0,070 |
| Abrieb [mm³] | 148 | 123 | 112 | 108 | 103 | 107 | 109 | 135 |

Wie ein Vergleich der Vulkanisate, die aus Harz b enthaltenen Kautschukmischungen R5, E9, E10, E11 gefertigt sind, zeigt, lassen sich die beschriebenen vorteilhaften Effekte auch mit Ricon 603 erzielen. So weisen die Vulkanisate aus den Kautschukmischungen E9, E10, E11 - jeweils im Vergleich zum Vulkanisat aus der Referenz-Kautschukmischung R5 - einen größeren Verlustfaktor tan d (0°C) (Nassgriffindikator) und einen geringeren Verlustfaktor tan d (70°C) (Rollwiderstandsindikator) auf, sie liefern daher Laufstreifen mit besseren Nassgriff- und Rollwiderstandseigenschaften. Insbesondere weisen die Vulkanisate aus den Kautschukmischungen E9, E10, E11 - im Vergleich zum Vulkanisat aus der Referenz-Kautschukmischung R5 - jeweils eine deutlich größere Differenz zwischen ihrem Wert für tan d (0°C) und ihrem Wert für tan d (70°C) auf, was auf eine besonders günstige Lösung des zwischen den Nassgriffeigenschaften und dem Rollwiderstand bestehenden Zielkonfliktes schließen lässt. Überraschender Weise sind die Vulkanisate aus den Kautschukmischungen E9, E10, E11 auch noch in ihrer Abriebfestigkeit besser als das Vulkanisat aus der Referenz-Kautschukmischung R5 (107, 109, 135 vs. 148). Geringe Mengen an Ricon 603 (E9, E10) waren dabei für die Abriebfestigkeit sehr günstig.

Ein Vergleich der Vulkanisate, die aus den das Harz c enthaltenden Kautschukmischungen R6, E6, E7, E8 gefertigt sind, zeigt den Einfluss von POLYVEST EP ST-E 60. Die Vulkanisate aus den Kautschukmischungen E6, E7, E8 weisen - jeweils verglichen mit dem Vulkanisat aus der Kautschukmischung R6 - kleinere Werte für den Verlustfaktor tan d (0°C) (Nassgriffindikator), kleinere Werte für den Verlustfaktor tan d (70°C) (Rollwiderstandsindikator) und kleinere Werte für den Abrieb auf. Die Kautschukmischungen E6, E7, E8 liefern daher Laufstreifen, welche abriebfester und im Rollwiderstand verbessert sind.

Aus der 4.Versuchsreihe folgt, dass sich die vorteilhaften Vulkanisateigenschaften unabhängig von der Glasübergangstemperatur T_{g}, dem Vinylanteil und dem Verhältnis von cis- zu trans-Isomeren (cis/trans ratio) der Polybutadiene erzielen lassen. Ferner wurde gezeigt, dass die Position (Endgruppe bzw. Seitengruppe) der Funktionalisierung der Harze und deren molare Masse keinen bzw. einen nicht signifikanten Einfluss haben.

### 5. Versuchsreihe - Dien-Kautschuke und Füllstoffmenge

In dieser Versuchsreihe wurden Kautschukmischungen, welche sowohl SBR-Kautschuk als auch Naturkautschuk (SBR/NR-Blends) sowie gegenüber den bisherigen Kautschukmischungen höhere Füllstoffmengen enthielten, getestet.

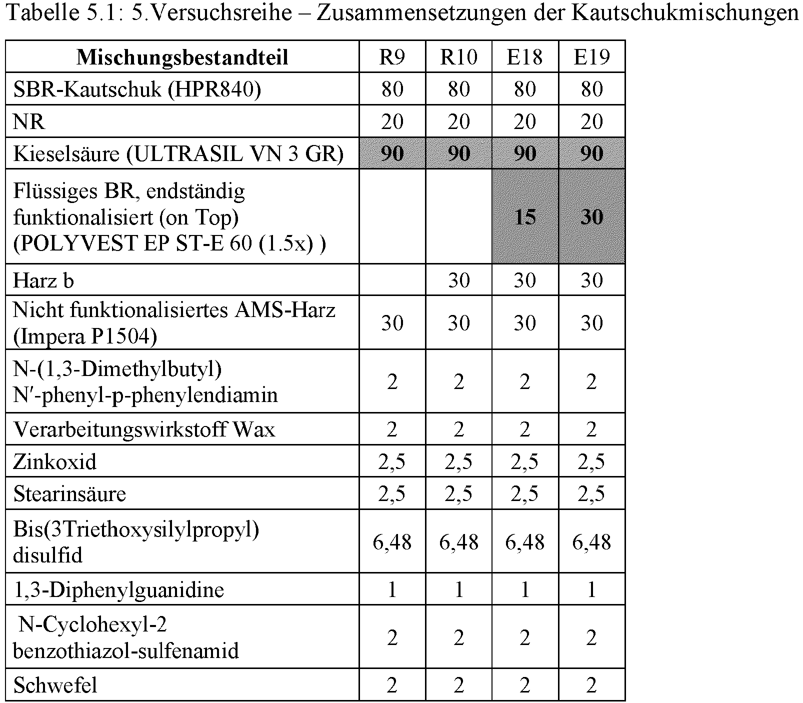

Der in der 5. Versuchsreihe eingesetzt SBR-Kautschuk ist HPR 840, welcher ein funktionalisiertes Styrol-Butadien-Copolymer ist und dessen Herstellung beispielsweise in EP 2 703 416 A1 beschrieben ist. HPR 840 ist an einem Kettenende mit einer Aminogruppen- und/oder mit einer Ammoniumgruppen enthaltenden Silyl-Schutzgruppe funktionalisiert. Derartige Funktionalisierungen können durch Reaktion eines SBR-Kautschuks mit einer Aminogruppe enthaltenden Alkoxysilylverbindung, welche Schutzgruppen an der Aminogruppe aufweist, erhalten werden. Beispielsweise kann N,N-Bis(trimethylsily)aminopropylmethyldiethoxysilan eingesetzt werden. Weitere mögliche Substanzen für eine derartige Funktionalisierung sind in der EP 2 703 416 A1 beschrieben. Nach Entschützung (Abspalten der Schutzgruppe) wird HPR 840 erhalten.

HPR 840 ist am anderen Kettenende mit einer Aminogruppe funktionalisiert. Dabei kann es sich um primäre, sekundäre oder tertiäre Aminogruppen handeln, die auch ringförmig vorliegen können. Die Funktionalisierung kann erreicht werden, indem bei der Polymerisation Lithiumamide, wie in der EP 2 703 416 A1 beschrieben, zugegeben werden oder die Amide in situ durch Zugabe von n-Butyllithium und Aminen, z. B. ringförmigen Aminen wie Piperidin oder Piperazine, bei der Polymerisation erzeugt werden.

Vorzugsweise handelt es sich bei der Aminogruppe am anderen Kettenende um eine ringförmige Aminogruppe. Hierzu kann beispielsweise Piperidin in Kombination mit n-Butyllithium bei der Polymerisation zugegeben werden.

**Tabelle 5.2: 5.Versuchsreihe - Vulkanisatprüfungen**

| **Vulkanisateigenschaft** | R9 | R10 | E18 | E19 |
|---|---|---|---|---|
| Härte Shore A (T= 25°C) | 70,8 | 60,8 | 60,5 | 59,2 |
| tan d (0°C) | 0,508 | 0,603 | 0,66 | 0,567 |
| tan d (70°C) | 0,145 | 0,159 | 0,128 | 0,099 |
| Abrieb [mm³] | 106 | 127 | 100 | 111 |

Die Vulkanisate aus E18 und E19 weisen im Vergleich zu den Vulkanisaten aus R9 und R10 einen tendenziell höheren Verlustfaktor tan d (0°C) (Nassgriffindikator) und einen deutlich geringeren Verlustfaktor tan d (70°C) (Rollwiderstandsindikator) auf. Der Rollwiderstand eines aus E18 bzw. E19 gefertigten Laufstreifens ist daher gegenüber einem aus R9 bzw. R10 gefertigten Laufstreifen deutlich geringer. Ferner ist der Nassgriff eines aus E18 bzw. E19 gefertigten Laufstreifens gegenüber einem aus R9 bzw. R10 gefertigten Laufstreifen tendenziell verbessert. Die Abriebfestigkeit ist tendenziell verbessert.

In der 5.Versuchsreihe konnte gezeigt werden, dass die Effekte nicht auf ausschließlich SBR-Kautschuk enthaltende Kautschukmischungen beschränkt sind und sich auch mit höheren Füllstoffmengen erzielen lassen.

### Schlussfolgerung

Tabelle 6 zeigt eine Zusammenfassung der durchgeführten Versuchsreihen 1 bis 5.

**Tabelle 6: Zusammenfassung der Versuchsreihen**

| | **VR1** | **VR2** | **VR3** | **VR3** | **VR4** | **VR4** | **VR5** |
|---|---|---|---|---|---|---|---|
| **Dien-Kautschuk** | SBR | SBR | SBR | SBR | SBR | SBR | SBR/NR |
| **Harz** | a | b | d | e | b | c | b |
| *Fuktionalisierung* | Ende | Ende | Seite | Seite | Ende | Seite | Ende |
| *Harzbasis* | α-Methylsytrol | α-Methylsytrol | α-Methylsytrol | Methaacrylat | α-Methylsytrol | α-Methylsytrol | α-Methylsytrol |
| *mittlere molare Masse Mn [g*/*mol]* | 699 | 775 | 534 | 876 | 775 | 5320 | 775 |
| *Formel* | Formel I | Formel II | * | * | Formel II | Formel III | Formel II |
| **Polybutadien, endständig funktionalisiert** | POLYV. EP ST-E 60 | POLYV. EP ST-E 60 | POLYV. EP ST-E 60 | POLYV. EP ST-E 60 | Ricon 603 | POLYV. EP ST-E 60 | POLYV. EP ST-E 60 |

| | | | | | | | |
|---|---|---|---|---|---|---|---|
| * siehe WO 2018/191187 A1 | | | | | | | |

Aus den durchgeführten Versuchsreihen folgt insbesondere, dass Kautschukmischungen mit Dienkautschuken, welche ein an einer Seitengruppe funktionalisiertes bzw. ein endständig mit einer Silyl-Schutzgruppe funktionalisiertes Harz in Kombination mit einem endständig mit einer Silyl-Schutzgruppe funktionalisiertem flüssigen Polybutadien enthalten, Vulkanisate liefern, welche vorteilhafte Nassgriffeigenschaften, einen geringen Rollwiderstand und eine zumindest im Wesentlichen unverändert gute Abriebfestigkeit aufweisen.

Die Erfindung ist auf die beschriebenen konkreten Ausführungsbeispiele nicht beschränkt.

Im Nachfolgenden werden zu in den Versuchsreihen dargelegten Kautschukmischungen E1 bis E19, also zu den Ausführungsbeispielen der Erfindung, eine Vielzahl von alternativen Mischungsbestandteilen angeführt und die Mischungsbestandteile entsprechend erläutert.

### Dienkautschuk mit einer mittleren molaren Masse Mn von mehr als 150.000 g/mol:

Die Kautschukmischung gemäß der Erfindung ist schwefelvernetzbar und enthält wenigstens einen Dienkautschuk.

Als Dienkautschuk werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die Dienkautschuk(e) ist bzw. sind bevorzugt ausgewählt aus der Gruppe natürliches Polyisopren, synthetisches Polyisopren, epoxidiertes Polyisopren, Butadien-Kautschuk, Butadien-Isopren-Kautschuk, lösungspolymerisierter Styrol-Butadien-Kautschuk, emulsionspolymerisierter Styrol-Butadien-Kautschuk, Styrol-Isopren-Kautschuk, Flüssigkautschuk mit einer molaren Masse Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk, hydriertem Styrol-Butadien-Kautschuk, Butylkautschuk (IIR) und Halobutylkautschuk.

Ist die Kautschukmischung für einen Laufstreifen eines Fahrzeugreifens vorgesehen, ist der bzw. sind die Dienkautschuk(e) bevorzugt ausgewählt aus der Gruppe natürliches Polyisopren (NR), synthetisches Polyisopren (IR), Butadien-Kautschuk (BR), lösungspolymerisierter Styrol-Butadien-Kautschuk (SSBR) und emulsionspolymerisierter Styrol-Butadien-Kautschuk (ESBR).

Gemäß einer bevorzugten Ausführung enthält die Kautschukmischung wenigstens ein natürliches Polyisopren in einer Menge von 2 phr bis 100 phr, insbesondere von 5 phr bis 30 phr, besonders bevorzugt 5 phr bis 20 phr. Hiermit wird eine besonders gute Prozessierbarkeit der Kautschukmischung erzielt. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen wird. Unter natürlichem Polyisopren (NR) wird nicht synthetisches Polyisopren verstanden.

Gemäß einer weiteren vorteilhaften Ausführung enthält die Kautschukmischung wenigstens ein Polybutadien (Butadienkautschuk), bevorzugt in einer Menge von 2 phr bis 100 phr, insbesondere von 5 phr bis 50 phr, besonders bevorzugt von 10 phr bis 25 phr. Hiermit werden besonders gute Abrieb- und Reißeigenschaften sowie eine gute Prozessierbarkeit bei geringem Hystereseverlust der Kautschukmischung erzielt.

Gemäß einer weiteren besonders vorteilhaften Ausführungsform enthält die Kautschukmischung wenigstens einen Styrol-Butadien-Kautschuk (SBR) in einer Menge von 2 phr bis 100 phr, insbesondere von 25 phr bis 80 phr, vorzugsweise von 65 phr bis 85 phr. Hiermit werden ebenfalls eine gute Prozessierbarkeit bei geringem Hystereseverlust sowie gute Abrieb- und Reißeigenschaften der Kautschukmischung erzielt. Bevorzugt ist der SBR ein SSBR, womit sich optimierte Eigenschaften ergeben.

Gemäß einer weiteren besonders vorteilhaften Ausführung enthält die Kautschukmischung einen Polymerblend aus den genannten Kautschuken NR, BR und SBR, bevorzugt SSBR, und zwar bevorzugt in den jeweils genannten Mengen in sämtlichen möglichen Kombinationen.

Gemäß einer weiteren besonders vorteilhaften Ausführung, enthält die Kautschukmischung zumindest ein natürliches und/oder synthetisches Polyisopren in einer Menge von 5 phr bis 30 phr, zumindest einen Styrol-Butadien-Kautschuk in einer Menge von 25 phr bis 80 phr, und wenigstens einen Butadien-Kautschuk in einer Menge von 5 phr bis 50 phr.

Bei dem natürlichen und/oder synthetischen Polyisopren kann es sich jeweils sowohl um cis-1,4-Polyisopren als auch um 3,4-Polyisopren handeln. Bevorzugt ist die Verwendung von cis-1,4-Polyisopren mit einem cis 1,4 Anteil > 90 Gew.-%. Das Polyisopren kann durch stereospezifische Polymerisation in Lösung mit Ziegler-Natta-Katalysatoren oder unter Verwendung von fein verteilten Lithiumalkylen erhalten werden. Bei Naturkautschuk (NR) handelt es sich um cis-1,4 Polyisopren, wobei der cis-1,4-Anteil größer als 99 Gew.-% ist.

Ferner ist auch ein Gemisch eines oder mehrerer natürlicher Polyisoprene mit einem oder mehreren synthetischen Polyisopren(en) denkbar.

Falls in der Kautschukmischung Butadien-Kautschuk (= BR, Polybutadien) enthalten ist, kann es sich die dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 Gew % bis 50 Gew.-%. Mit einem high-cis BR werden besonders gute Abriebeigenschaften sowie eine niedrige Hysterese der Kautschukmischung erzielt.

Das oder die eingesetzte(n) Polybutadien(e) kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben bei Polybutadien genannten Modifizierungen und Funktionalisierungen endgruppenmodifiziert und/oder entlang der Polymerketten funktionalisiert sein.

Die Kautschuke können als reine Kautschuke oder in ölverstreckter Form eingesetzt werden.

### Füllstoff:

Es ist zumindest ein beliebiger Füllstoff enthalten. Insbesondere sind Ruße, Kieselsäuren, Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern) in der Kautschukmischung enthalten, wobei die Füllstoffe in Kombination eingesetzt werden können. Ferner können als Füllstoffe Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy- und Carbonyl-Gruppen, Graphit, Graphene sowie "carbon-silica dual-phase filler" vorgesehen sein.

Es können demgemäß auch mehrere Kieselsäuren in der Mischung vorliegen. Bei den Kieselsäuren kann es sich um die der Fachperson bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 m²/g bis 400 m²/g, bevorzugt von 35 m²/g bis 350 m²/g, besonders bevorzugt von 85 m²/g bis 320 m²/g und ganz besonders bevorzugt von 120 m²/g bis 235 m²/g, und eine CTAB-Oberfläche (gemäß ASTM D 3765) von 30 m²/g bis 400 m²/g, bevorzugt von 30 m²/g bis 330 m²/g, besonders bevorzugt von 80 m²/g bis 300 m²/g und ganz besonders bevorzugt von 115 m²/g bis 200 m²/g, aufweist.

Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, sogenannte HD-Kieselsäuren (z. B. Zeosil^{®} 1165 MP der Firma Solvay), verwendet werden. Vorzugsweise weist die Kieselsäure eine CTAB-Zahl von mehr als 130 m²/g auf.

Die Menge der wenigstens einen Kieselsäure beträgt insbesondere 5 phr bis 300 phr, bevorzugt 10 phr bis 200 phr, besonders bevorzugt 20 phr bis 180 phr. Im Falle unterschiedlicher Kieselsäuren ist mit den angegebenen Mengen die Gesamtmenge an enthaltenen Kieselsäuren gemeint.

In einer Ausführungsform weist der Ruß bzw. weisen die Ruße eine Jodzahl gemäß ASTM D 1510 (Jodadsorptionszahl) von 30 g/kg und 250 g/kg, insbesondere von 30 g/kg bis 180 g/kg, bevorzugt 40 g/kg bis 180 g/kg, besonders bevorzugt von 40 kg/g bis 130 kg/g, und eine DBP-Zahl gemäß ASTM D 2414 von 80 ml/100g bis 200 ml/100 g, insbesondere von 100 ml/100g bis 200 ml/100g, bevorzugt von 115 ml/100g bis 200 ml/100g auf. Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Es ist bevorzugt, wenn ein einziger Rußtyp verwendet wird, es können aber auch verschiedene Rußtypen in Kombination eingesetzt werden. Ruß(e) ist bzw. sind in einer Gesamtmenge von bis zu 250 phr enthalten.

### Poly- oder Oligomer mit einer mittleren molaren Masse Mn von kleiner 150.000 g/mol, welches mit einer füllstoffwechselwirkenden funktionellen Gruppe funktionalisiert ist und eine Glasübergangstemperatur T_{g} < -15°C aufweist:

Anstelle des in den Ausführungsbeispielen eingesetzten, endständig mit einer Silyl-Schutzgruppe funktionalisierten Polybutadiens (BR) kann zumindest ein beliebiges Poly- oder Oligomer mit einer mittleren molare Masse Mn (Zahlenmittel der molaren Masse gemäß Gelpermeations-Chromatographie) von kleiner 150.000 g/mol, welches an beliebiger Stelle mit einer füllstoffwechselwirkenden funktionellen Gruppe funktionalisiert ist und eine Glasübergangstemperatur T_{g} < -15°C aufweist, eingesetzt werden.

Füllstoffwechselwirkend bedeutet, dass das Poly- oder Oligomer über Van-der-Waals-, Dipol-Dipol- oder elektrostatische Wechselwirkungen oder über kovalente bzw. nicht-kovalent Bindungen, wie beispielsweise Wasserstoffbrückenbindungen, mit der Füllstoffoberfläche wechselwirkt.

Vorzugsweise beträgt die Glasübergangstemperatur T_{g} < -20°C, besonders bevorzugt < - 30°C. Ferner ist es bevorzugt, wenn die mittlere molare Masse Mn 500 g/mol bis 50.000 g/mol, insbesondere von 1.000 g/mol bis 20.000 g/mol, besonders bevorzugt von 3.000 g/mol bis 15.000 g/mol, beträgt.

Bei der Funktionalisierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Säureanhydride und/oder Phthalocyanin-Gruppen und/oder Silan-Sulfid-Gruppen handeln. Es kommen aber auch weitere, der fachkundigen Person bekannte Modifizierungen (Funktionalisierungen) in Frage. Bestandteil solcher Funktionalisierungen können Metallatome sein.

Ferner ist es günstig, wenn das genannte Poly- bzw. Oligomer eine oder mehrere Silizium-Atome enthält. Bevorzugt ist es mit einer Silyl-Schutzgruppe der Formel IV funktionalisiert:

(R¹R²R³)Si- Formel IV

R¹, R², R³: Die Reste R¹, R², R³ sind unabhängig voneinander ausgewählt aus der Gruppe lineare oder verzweigten Alkoxy-, Cycloalkoxy,- Alkyl-, Cycloalkyl-, Aryl- oder Hydroxygruppen, jeweils mit 1 bis 20 Kohlenstoffatomen, oder Wasserstoff.

Die Silyl-Schutzgruppe gemäß Formel IV kann direkt oder über eine Brücke an die Polymerkette des Poly- bzw. Oligomers angebunden sein. Die Brücke kann aus einem gesättigten oder ungesättigten Kohlenwasserstoffrest gebildet sein, welche Heteroatome, insbesondere Schwefel und/oder Stickstoff, enthalten kann.

Die Funktionalisierung kann eine der oben beschriebenen sein und einen Grad der Funktionalisierung von beispielsweise 0,0006 mol% bis 100 mol% der Monomere, insbesondere von 0,05 mol% bis 70 mol% der Monomere, bevorzugt 0,1 mol% bis 50 mol% der Monomere aufweisen, wobei die Funktionalisierung am Ende oder innerhalb der Kette erfolgen kann.

Das mit einer füllstoffwechselwirkenden Gruppe funktionalisierte Poly- oder Oligomer kann insbesondere in Mengen von 5 phr bis 200 phr, vorzugsweise von 10 phr bis 150 phr, besonders bevorzugt von 10 phr bis 100 phr enthalten sein.

Weiterhin können unfunktionalisierte Poly- oder Oligomere oder eine Kombination von funktionalisierten und unfunktionalisierten Poly- oder Oligomeren in die Mischung eingemischt werden. Die Gesamtmenge an eingemischten Poly- oder Oligomeren beträgt 2 phr bis 200 phr, insbesondere von 5 phr bis 150 phr, bevorzugt von 10 phr bis 100phr. Weiterhin können Kombinationen von funktionalisierten Poly- oder Oligomeren verwendet werden. Insbesondere können Kombinationen aus endgruppen- und seitengruppenfunktionalisierten Oligo- oder Polymeren verwendet werden.

Als Poly- oder Oligomer kommen hier alle Polymere mit Tg <-15°C infrage, somit auch Polyolefine wie Poly(vinylidene chloride), Polyethylen, Poly(vinylidene fluoride), , Polyacrylate, Poly(decyl methacrylate), Poly(dodecyl methacrylate), Poly(isodecyl methacrylate), Poly(octyl methacrylate) Polypropylen, , Poly(1-butene), Poly(1-octene), Poly(1-pentene),, Poly(isobutene), Poly(1-methyl-1-butenylene), Poly(caprolactone), Poly(1,4-butane sebacate), Poly(ethylene adipate), Poly(3-hexoxypropylene oxide), Poly(dipropyl fumarate), Poly(ethylene glycol), Poly(propylene glycol), Poly(trimethylene glycol), Polyacetal, Poly(vinyl ether), Poly(vinyl ethyl ketone), Poly(butyl vinyl thioether), sowie die o.g. Kautschuke bestehend aus Polyisopren, epoxidiertem Polyisopren, Butadien-Kautschuk, Butadien-Isopren-Kautschuk, Styrol-Butadien-Kautschuk, Styrol-Isopren-Kautschuk, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Polycyclopentene-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk, hydriertem Styrol-Butadien-Kautschuk, Farnesene und Flüssigkautschuke mit einer molaren Masse Mw von größer als 20000 g/mol.

Bevorzugt ist das bzw. sind Poly- oder Oligomer(e) ausgewählt aus der Gruppe Polyethylen, Polypropylene, natürlichem Polyisopren, synthetischem Polyisopren, epoxidiertem Polyisopren, Butadien-Kautschuk, Butadien-Isopren-Kautschuk, lösungspolymerisiertem Styrol-Butadien-Kautschuk, emulsionspolymerisiertem Styrol-Butadien-Kautschuk, Styrol-Isopren-Kautschuk, Flüssigkautschuken mit einer molaren Masse Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk, hydriertem Styrol-Butadien-Kautschuk sowie Farnesene.

Weiterhin können Kombinationen der vorgenannten Oligo- oder Polymere verwendet werden.

### Poly- oder Oligomer mit einer mittleren molaren Masse Mn von kleiner 150.000 g/mol, welches mit einer füllstoffwechselwirkenden funktionellen Gruppe funktionalisiert ist und eine Glasübergangstemperatur T_{g} > -15°C aufweist:

Das in den Ausführungsbeispielen eingesetzte, endständig mit einer Silyl-Schutzgruppe funktionalisierte Harz ist ein beliebiges Poly- bzw. Oligomer mit einer Glasübergangstemperatur T_{g} > -15°C, insbesondere > -10°C, welches an beliebiger Stelle mit einer füllstoffwechselwirkenden funktionellen Gruppe funktionalisiert ist.

Die molare Masse (Mn) beträgt insbesondere 200 g/mol bis 150.000 g/mol, bevorzugt 200 g/mol bis 50.000 g/mol, besonders bevorzugt 200 g/mol bis 30.000 g/mol. Die Glastemperatur (Tg) liegt insbesondere unter 200°C, bevorzugt unter 180°C und besonders bevorzugt unter 160°C.

Weiterhin können Kombinationen von Oligo- oder Polymeren mit unterschiedlichen molaren Massen eingesetzt werden.

Bei der Funktionalisierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Säureanhydride und/oder Phthalocyanin-Gruppen und/oder Silan-Sulfid-Gruppen handeln. Es kommen aber auch weitere, der fachkundigen Person bekannte Modifizierungen (Funktionalisierungen) in Frage. Bestandteil solcher Funktionalisierungen können Metallatome sein.

Bevorzugter Weise ist dieses Poly- bzw. Oligomer ebenfalls mit der Silyl-Schutzgruppe der bereits genannten Formel IV funktionalisiert, wie in WO 2015/153055 für Dicyclopentadiene (DCPD) beschrieben. Alternativ ist es bevorzugt, wenn es mit einer Silyl-Schutzgruppe gemäß Formel V funktionalisiert ist.

- [Zₖ-Xₙ-R⁴-(CH₂)ₘ-Si(R⁵)ₚ]_{q} Formel V

In Formel V steht
- Z für eine aromatische oder aliphatische Gruppe ggf. mit einem oder mehreren Heteroatom(en),
- X für einen Linker, enthaltend Schwefel und/oder Sauerstoff und/oder Stickstoff und/oder eine Carbonylgruppe,
- R⁴ für eine oder mehrere aliphatische Gruppe(n) mit 1 bis 18 Kohlenstoffatomen und/oder eine Verbindungsgruppe mit zumindest einem Heteroatom, insbesondere mit Sauerstoff, Stickstoff oder Schwefel,
- R⁵ für eine verzweigte oder unverzweigte Alkoxy-, Aryloxy-, Alkyl- oder Arylgruppe mit 1 bis 18 Kohlenstoffatomen, Wasserstoff oder eine Hydroxygruppe, wobei zumindest ein R⁵ eine Alkoxy- oder eine Aryloxygruppe mit 1 bis 18 Kohlenstoffatomen, ein Wasserstoffatom oder einer Hydroxygruppe ist, wobei R⁵ innerhalb des Moleküls gleich oder verschieden sein kann,
- q für eine ganze Zahl ≥ 1,
- k für 0 oder 1,
- n für eine ganze Zahl zwischen 1 und 10,
- m für eine ganze Zahl zwischen 0 und 10 und
- p für 1, 2 oder 3.

Die Funktionalisierung kann eine der oben beschriebenen sein und einen Grad der Funktionalisierung von beispielsweise 0,0006 mol% bis 100 mol% der Monomere, 0,05 mol% bis 70 mol% der Monomere, bevorzugt 0,1 mol% bis 50 mol% der Monomere aufweisen, wobei die Funktionalisierung am Ende oder innerhalb der Kette erfolgen kann. Das mit einer füllstoffwechselwirkenden Gruppe funktionalisierte Poly- oder Oligomer kann in Mengen von 5 phr bis 200 phr, insbesondere von 10 phr bis 150 phr, besonders bevorzugt von 10 phr bis 100 phr eigesetzt werden.

Weiterhin können unfunktionalisierte Poly- oder Oligomere in die Mischung eingemischt werden oder eine Kombination von funktionalisierten und unfunktionalisierten Poly- oder Oligomeren in die Mischung eingemischt werden. Die Gesamtmenge an eingemischten Poly- oder Oligomeren beträgt 2 phr bis 200 phr, 5 bis 150 phr oder 10 bis 100phr.

Das bevorzugt eingesetzte Oligo- oder Polymer basiert insbesondere auf der Polymerisation oder Co-Polymerisation von zwei oder mehr ungesättigten aliphatischen Monomeren, ungesättigten aromatischen Monomeren, Terpenen, Terpenphenolen, Rosinsäuren, Kollophonium, ungesättigten cycloaromatischen Monomeren, ungesättigten cycloaliphatischen Monomeren, ungesättigten Fettsäuren, Methacrylaten und/oder vinylaromatischen Monomeren oder einer Mischung aus aliphatischen und aromatischen Monomeren. Das aliphatische Monomer kann ausgewählt sein aus C₅ 1,3-Pentadien, Benzofuran (Coumaron), Inden, Indan, wie in WO2018118855A1 beschrieben, und Dicyclopentadien. Die aromatischen Monomere und/oder vinylaromatischen Monomore können beispielsweise ausgewählt sein aus Styrol, Vinyltoluen, Alpha-Methylstyrol und Diisopropylbenzol.

Bei den Monomeren der Terpene kann es sich um mono- und/oder bizyklische Terpene handeln.

Das Oligo- oder Polymer kann ferner ausgewählt sein aus der Gruppe Polyolefine, Polyester, Polyether, Polythioether, Polyketone, Polyphthalate, Polyterephthalate, Polyakrylamide, Polylactate, Polycarvonate, Polyacetate, Polyketone, Polymethakrylate, Polyakrylate, Polymethakrylonitrile und Polyakrylonitrile, Polyamide als Oligo- oder Polymere.

Insbesondere gehören hierzu Alpha-Methylstyrol, Styrol, Vinyltoluen, Diisopropylbenzol, 1,3-Pentadien, Benzofuran (Coumaron), Inden, Indan, Dicyclopentadien, Terpene, Ethyl-Vinyl Acetat, Ethyl-Butyl-Acetat und Styrol-Blockcopolymere.

Weiterhin können Kombinationen von funktionalisierten Poly- oder Oligomeren verwendet werden. Insbesondere können Kombinationen aus endgruppen- und seitengruppenfunktionalisierten Oligo- oder Polymeren verwendet werden.

### Silan:

Silane kommen in der erfindungsgemäßen Mischung optional zum Einsatz, insbesondere dann, wenn durch die Auswahl der genannten Poly- bzw. Oligomere mit Tg <-15°C bzw. Tg >-15°C noch keine optimale Vernetzung an den Dienkautschuk und dadurch keine optimale Anbindung des Dienkautschukes an den Füllstoff möglich ist.

Bevorzugt ist in der Kautschukmischung ein Kupplungsagens in Form von Silan oder einer siliziumorganischen Verbindung vorhanden. Es kann ein einziges Silan oder es können verschiedene Silane in Kombination miteinander eingesetzt werden. In Frage kommende Silane sind beispielsweise in der WO 2018/191187 A1, Absatz [0094], genannt.

Silan-Kupplungsreagenzien können als Haftvermittler für anorganische Materialien, zum Beispiel Glaskugeln, Glassplittern, Glasoberflächen, Glasfasern, für oxidische Füllstoffe, bevorzugt Kieselsäuren, und für organischen Polymere, zum Beispiel Duroplaste, Thermoplaste oder Elastomere, beziehungsweise als Vernetzungsmittel und Oberflächenmodifizierungsmittel für oxidische Oberflächen verwendet werden.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung).

Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um eine der folgenden chemischen Gruppen handeln: -SCN, -SH, -NH₂ oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl) polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden. Bevorzugt wird ein Silan-Gemisch eingesetzt, welches zu 40 Gew.% bis 100 Gew.% Disulfide, besonders bevorzugt 55 Gew.% bis 85 Gew.% Disulfide und ganz besonders bevorzugt 60 Gew.% bis 80 Gew.% Disulfide enthält.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter der Bezeichnung NXT in verschiedenen Varianten von der Firma Momentive, USA, oder solche, die unter der Bezeichnung VP Si 363^{®} von der Firma Evonik Industries vertrieben werden. Die Menge des Silan-Kupplungsagens beträgt bevorzugt 0,1 phf bis 20 phf, besonders bevorzugt 1 phf bis 15 phf.

Beschreibung der hydrolysierbaren Gruppen eines Silans:

(R1)oSi-R2

wobei Folgendes gilt:
o ist 1, 2 oder 3.

Die Reste R1 sind gleich oder verschieden und sind ausgewählt aus der Gruppe Alkoxygruppen mit 1 bis 10 Kohlenstoffatomen, Cycloalkoxygruppen mit 4 bis 10 Kohlenstoffatomen, Phenoxygruppen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Aralkylgruppen mit 7 bis 20 Kohlenstoffatomen, Alkylpolyethergruppe -O-(R3-O)r-R5 (wobei R3 gleich oder verschieden sind und verzweigte oder unverzweigte, gesättigte oder ungesättigte, aliphatische, aromatische oder gemischt aliphatisch/aromatische zweibindige C₁-C₃₀ Kohlenwasserstoffgruppe sind, vorzugsweise -CH₂-CH₂-, und wobei r eine ganze Zahl von 1 bis 30, vorzugsweise 3 bis 10, und R5 unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe oder Halogenide sind).

Dabei können zwei R1 eine cyclische Dialkoxygruppe mit 2 bis 10 Kohlenstoffatomen bilden, oder es können zwei R1 von je einem anderen Molekül ein verbrückendes Sauerstoffatom darstellen, wobei jeweils ein R1 pro Molekül eine Alkoxy- oder Halogenidgruppe ist.

Der Rest R2 steht für lineare oder verzweigte Alkylgruppen mit 1 bis 20 Kohlenstoffatomen, Cycloalkylgruppen mit 4 bis 12 Kohlenstoffatomen, Arylgruppen mit 6 bis 20 Kohlenstoffatomen, Aralkylgruppen mit 7 bis 20 Kohlenstoffatomen, Alkenylgruppen mit 2 bis 20 Kohlenstoffatomen oder Alkinylgruppen mit 2 bis 20 Kohlenstoffatomen.

Das Silan kann auf einem Träger, beispielsweise Wachs, Polymer oder Ruß, aufgebracht sein, und in dieser Form der Kautschukmischung zugegeben sein. Das erfindungsgemäße Silan kann auf einer Kieselsäure aufgebracht sein, wobei die Anbindung physikalisch oder chemisch erfolgt sein kann.

### Weichmacher/Prozesshilfsmittel:

Unter Prozesshilfsmittel werden Öle und andere viskositätssenkende Substanzen verstanden. Es kann sich bei diesen Prozesshilfsmitteln beispielsweise um Weichmacheröle oder Weichmacherharze handeln.

Beispielsweise handelt es sich um aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittlere molare Masse (Bestimmung per GPC = gel permeation chromatography, in Anlehnung an BS ISO 11344:2004) zwischen 500 g/mol und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist".

Bei den Monomeren kann es sich um alle dem Fachmann bekannten Monomere von Kohlenwasserstoffharzen handeln, wie aliphatische C5-Monomere, weitere ungesättigte Verbindungen, die kationisch polymerisiert werden können, enthaltend Aromaten und/oder Terpene, Terpenephenole und/oder Alkene und/oder Cycloalkene.

In einer bevorzugten Ausführungsform der Erfindung ist das Kohlenwasserstoffharz ausgewählt aus der Gruppe bestehend aus aliphatischen C5-Harzen und Kohlenwasserstoffharzen aus alpha-Methylstyrol und Styrol.

Bevorzugt weist das Kohlenwasserstoffharz einen Erweichungspunkt gemäß ASTM E 28 (Ring und Ball) von 10°C bis 180°C, insbesondere von 60°C bis 150°C, besonders bevorzugt von 80°C bis 99°C auf.

Weiterhin weist das Kohlenwasserstoffharz bevorzugt eine molare Masse Mw von 500 g/mol bis 4000 g/mol, bevorzugt von 1300 g/mol bis 2500 g/mol auf.

### Vernetzungsagens (Vulkanisationsmittel):

Als Vernetzungsagens wird bevorzugter Weise zumindest ein Schwefel oder zumindest ein Schwefelspender sowie peroxidische Vernetzer, beispielsweise organische Peroxide wie Dicumylperoxid, Di-(2,4-dichlorobenzoyl)-peroxid, tert-Butyl peroxybenzoat, 1,1-Di-(tert.-butylperoxy)-3,3,5-trimethylcyclohexan, Butyl-4,4-di-(tert-butylperoxy) valerat, 2,5-Dimethyl-2,5-di(tert.-butylperoxy)hexin-3, Di-tert-butylperoxid, 2,5-Dimethyl-2,5-di-(tert-butylperoxy)-hexan, Di-(2-tert.-butyl-peroxyisopropyl)-benzen oder tert-Butylcumylperoxid oder eine Kombination daraus eingesetzt. Als weitere Alternativen können beispielsweise die in WO 2018/191187 A1, Absatz [0094], genannten Vernetzungsagenzien eingesetzt werden.

### Beschleuniger und Aktivatoren:

Die Beschleuniger und die Aktivatoren sind optionale Mischungsbestandteile, sie sind insbesondere Bestandteile eines Schwefel-Beschleuniger-Vernetzungssystems und werden daher bevorzugt in Kombination mit Schwefel oder einem Schwefelspender eingesetzt. Mögliche Beschleuniger sind beispielsweise der WO 2018/191187 A1, Absatz [0094], zu entnehmen.

Schwefel oder Schwefelspender sowie ein oder mehrere Beschleuniger werden im letzten Mischungsschritt in den genannten Mengen der Kautschukmischung zugesetzt.

Dabei ist der Beschleuniger bevorzugt ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Beispiele sind N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert.Butyl-2-benzothiazylsulfenamid (TBBS), Diphenylguanidin (DPG)

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.

### Weitere optionale Bestandteile:

a) Alterungsschutzmittel:
   z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ).
b) Aktivatoren:
   z. B. Fettsäuren (z. B. Stearinsäure) und/oder Zinkoxid (ZnO-Granulat oder -Pulver). Das herkömmlicherweise verwendete Zinkoxid weist in der Regel eine BET-Oberfläche von weniger als 10 m²/g auf. Es kann aber auch sogenanntes nano-Zinkoxid mit einer BET-Oberfläche von 10 m²/g bis 60 m²/g verwendet werden.
c) Wachse
d) Harze, insbesondere Klebharze
e) Mastikationshilfsmittel, wie z. B. 2,2'-Dibenzamidodiphenyldisulfid (DBD) und
f) Verarbeitungshilfsmittel, wie z.B. Fettsäuresalze (z.B. Zinkseifen), Fettsäureester und deren Derivate sowie Lipide und Phospholipide, insbesondere Lecithine, wie beispielsweise Sojalecithin.
g) Verstärkerharze, wie z. B. Lignin, Phenol-Formaldehydharze mit Härter und Polymerharze
h) Cobaltsalze und Weiteres
   Zur Verbesserung der Gummi-Metall-Haftung ist es seit langem bekannt, Cobaltsalze und/oder ein Resorcin-Formaldehyd-Kieselsäuresystem oder ein Resorcin-Formaldehydsystem als Zusätze für Gummierungsmischungen zu verwenden. Von den Resorcin-Harzen können auch die Vorkondensate eingesetzt werden. Gummierungsmischungen mit Cobaltsalzen und einem Resorcin-Formaldehyd-Kieselsäuresystem sind z. B. aus KGK Kautschuk Gummi Kunststoffe Nr. 5/99, S. 322-328, aus GAK 8/1995, S. 536 und der EP-A-1 260 384 bekannt.
i) Verstärkerharze
   Die Verstärkerharze können beispielsweise auf einem Methylendonor, z.B. Hexamethoxymethylmelamin (HMMM) oder Hexamethylentetramin (HMT), und einem Methylenakzeptor, z.B. auf Resorcin, Phenol oder einem Resorcin-, Phenol- oder Acetonderviat basieren. Es können beispielsweise Methylenakzeptoren basierend auf einem Resorcin-Formaldehyd-Novolak-Harz, einem Resorcin-Formaldehyd-Styrol-Novolak-Harz, einem Phenol-Formaldehyd-Novolak-Harz, beispielsweise Alnovol^{®}-Typen, einem Phenol-Formaldehyd-Styrol-Novolak-Harz, einem Phenol-Formaldehyd-Urethan-Novolak-Harz oder einem Aceton-Novolak-Harz verwendet werden. Die Verstärkerharze enthalten vorzugsweise einen Anteil an unangebundenem Resorcin von unter 0,1% und einen Anteil an unangebundenem Phenol von unter 1%.
   Die Verstärkerharze können auch ausschließlich auf einem Methylendonor, z.B. Hexamethoxymethylmelamin (HMMM) oder Hexamethylentetramin (HMT), basieren.
j) Cobalt
   ist vorzugsweise im Rahmen eines Stahlcordhaftsystems auf der Basis von organischen Cobaltsalzen und Verstärkerharzen und mehr als 2,5 phr Schwefel vorhanden. Die organischen Cobaltsalze werden üblicherweise in Mengen von 0,2 bis 2 phr eingesetzt. Als Cobaltsalze können z. B. Cobaltstearat, -borat, -borat-alkanoate, -naphthenat, -rhodinat, - octoat, -adipat usw. verwendet werden.

## Patentansprüche

1. Vernetzungsfähige Kautschukmischung enthaltend:
a) einen Dienkautschuk mit einer mittleren molaren Masse Mn von mehr als 150.000 g/mol,
b) einen Füllstoff,
c) ein Poly- oder Oligomer mit einer mittleren molaren Masse Mn von kleiner 150.000 g/mol, welches eine füllstoffwechselwirkende funktionelle Gruppe und eine Glasübergangstemperatur T_{g} < -15°C aufweist,
d) ein Poly- oder Oligomer mit einer mittleren molaren Masse Mn von kleiner 150.000 g/mol, welches eine füllstoffwechselwirkende funktionelle Gruppe und eine Glasübergangstemperatur Tg > -15°C aufweist,
wobei die zwischen der Glasübergangstemperatur T_{g} des Poly- oder Oligomers gemäß Merkmal c) und der Glasübergangstemperatur T_{g} des Poly- oder Oligomers gemäß Merkmal d) ermittelte Temperaturdifferenz ΔT_{g} mindestens 5°C beträgt,
wobei die füllstoffwechselwirkenden funktionellen Gruppen eine Wechselwirkung des Poly- oder Oligomers über Van-der-Waals-, Dipol-Dipol- oder elektrostatische Wechselwirkungen oder über kovalente bzw. nicht-kovalent Bindungen, wie beispielsweise Wasserstoffbrückenbindungen, mit der Füllstoffoberfläche bewirken.

2. Kautschukmischung nach Anspruch 1, **dadurch gekennzeichnet, dass** sie als Füllstoff Kieselsäure und/oder Ruß enthält.

3. Kautschukmischung nach Anspruch 1 oder 2, **dadurch gekennzeichnet, dass** das Poly- oder Oligomer gemäß Merkmal c) ein dienbasiertes Poly- oder Oligomer ist.

4. Kautschukmischung nach einem der Ansprüche 1 bis 3, **dadurch gekennzeichnet, dass** das Poly- oder Oligomer gemäß Merkmal c) eine Glasübergangstemperatur T_{g} von < -20°C, insbesondere von < -30°C, aufweist.

5. Kautschukmischung nach einem der Ansprüche 1 bis 4, **dadurch gekennzeichnet, dass** das Poly- oder Oligomer gemäß Merkmal c) eine mittlere molare Masse Mn (Zahlenmittel der molaren Masse gemäß Gelpermeations-Chromatographie) von 500 g/mol bis 50.000 g/mol, insbesondere von 1.000 g/mol bis 20.000 g/mol, besonders bevorzugt von 3.000 g/mol bis 15.000 g/mol, beträgt.

6. Kautschukmischung nach einem der Ansprüche 1 bis 5, **dadurch gekennzeichnet, dass** das Poly- oder Oligomer gemäß Merkmal c) mit einer Silyl-Schutzgruppe funktionalisiert ist.

7. Kautschukmischung nach Anspruch 1 bis 6, **dadurch gekennzeichnet, dass** das Poly- oder Oligomer gemäß Merkmal c) ein mit einer füllstoffwechselwirkenden funktionellen Gruppe funktionalisiertes Polybutadien ist.

8. Kautschukmischung nach einem der Ansprüche 1 bis 7, **dadurch gekennzeichnet, dass** das Poly- oder Oligomer gemäß Merkmal c) und/oder das Poly- oder Oligomer gemäß Merkmal d) mit einer Silyl-Schutzgruppe der Formel IV funktionalisiert ist:
(R¹R²R³)Si- Formel IV
wobei
R¹, R², R³ unabhängig voneinander ausgewählt sind aus der Gruppe lineare oder verzweigten Alkoxy-, Cycloalkoxy,- Alkyl-, Cycloalkyl-, Aryl- oder Hydroxygruppen, jeweils mit 1 bis 20 Kohlenstoffatomen, oder Wasserstoff und
wobei die Silyl-Schutzgruppe gemäß Formel IV direkt oder über eine Brücke an die Polymerkette des Poly- bzw. Oligomers angebunden ist und
wobei die Brücke aus einem gesättigten oder ungesättigten Kohlenwasserstoffrest, welcher Heteroatome, insbesondere Schwefel und/oder Stickstoff, enthalten kann, gebildet ist.

9. Kautschukmischung nach einem der Ansprüche 1 bis 8, **dadurch gekennzeichnet, dass** das Poly- oder Oligomer gemäß Merkmal d) mit einer Silyl-Schutzgruppe der Formel V funktionalisiert ist:
-[Zₖ-Xₙ-R⁴-(CH₂)ₘ-Si(R⁵)ₚ]_{q} Formel V
wobei
- Z für eine aromatische oder aliphatische Gruppe ggf. mit einem oder mehreren Heteroatom(en),
- X für einen Linker, enthaltend Schwefel und/oder Sauerstoff und/oder Stickstoff und/oder eine Carbonylgruppe,
- R⁴ für ein oder mehrere aliphatische Gruppen mit 1 bis 18 Kohlenstoffatomen und/oder eine Verbindungsgruppe mit zumindest einem Heteroatom, insbesondere mit Sauerstoff, Stickstoff oder Schwefel,
- R⁵ für eine verzweigte oder unverzweigte Alkoxy-, Aryloxy-, Alkyl- oder Arylgruppe mit 1 bis 18 Kohlenstoffatomen, Wasserstoff oder eine Hydroxygruppe, wobei zumindest ein R⁵ eine Alkoxy- oder eine Aryloxygruppe mit 1 bis 18 Kohlenstoffatomen, ein Wasserstoffatom oder einer Hydroxygruppe ist, wobei R⁵ innerhalb des Moleküls gleich oder verschieden ist,
- q für eine ganze Zahl ≥ 1,
- k für 0 oder 1,
- n für eine ganze Zahl zwischen 1 und 10,
- m für eine ganze Zahl zwischen 0 und 10 und
- p für 1, 2 oder 3.

10. Kautschukmischung nach einem der Ansprüche 1 bis 9, **dadurch gekennzeichnet, dass** das Poly- oder Oligomer gemäß Merkmal d) ein Harz ist, welches auf ungesättigten aliphatischen Monomeren, ungesättigten aromatischen Monomeren, Terpenen, Kollophonium, ungesättigten cycloaromatischen Monomeren, ungesättigten cycloaliphatischen Monomeren, ungesättigten Fettsäuren, Methacrylaten und/oder vinylaromatischen Monomeren basiert.

11. Kautschukmischung nach einem der Ansprüche 1 bis 10, **dadurch gekennzeichnet, dass** das Poly- oder Oligomer gemäß Merkmal d) eine molare Masse (Mn) von 200 g/mol bis 150.000 g/mol, bevorzugt von 200 g/mol bis 50.000 g/mol, besonders bevorzugt von 200 g/mol bis 30.000 g/mol aufweist.

12. Kautschukmischung nach einem der Ansprüche 1 bis 11, **dadurch gekennzeichnet, dass** das Poly- oder Oligomer gemäß Merkmal c) und das Poly- oder Oligomer gemäß Merkmal d) in einem Verhältnis von 1:50 bis 50:1, insbesondere von 1:10 bis 10:1, vorzugsweise von 1:5 bis 5:1, und besonders bevorzugt von 1:3 bis 3:1, enthalten sind.

13. Kautschukmischung nach einem der Ansprüche 1 bis 12, **dadurch gekennzeichnet, dass** die zwischen der Glasübergangstemperatur T_{g} des Poly- oder Oligomers gemäß Merkmal c) und der Glasübergangstemperatur T_{g} des Poly- oder Oligomers gemäß Merkmal d) ermittelte Temperaturdifferenz ΔT_{g} mindestens 10°C beträgt.

14. Kautschukmischung nach einem der Ansprüche 1 bis 13, **dadurch gekennzeichnet, dass** diese zumindest ein Silan-Kupplungsagens enthält.

15. Fahrzeugluftreifen, welcher zumindest einen aus Gummi bestehenden Reifenbauteil, insbesondere einen Laufstreifen, aufweist, der zumindest zum Teil aus einer Kautschukmischung gemäß einem der Ansprüche 1 bis 13 gefertigt wurde.

## Claims

1. Crosslinkable rubber mixture comprising:
a) a diene rubber having an average molar mass Mn of more than 150 000 g/mol,
b) a filler,
c) a polymer or oligomer having an average molar mass Mn of less than 150 000 g/mol, which has a filler-interactive functional group and a glass transition temperature T_{g} < -15°C,
d) a polymer or oligomer having an average molar mass Mn of less than 150 000 g/mol, which has a filler-interactive functional group and a glass transition temperature Tg > -15°C,
wherein the temperature differential ΔT_{g} ascertained between the glass transition temperature T_{g} of the polymer or oligomer of feature c) and the glass transition temperature T_{g} of the polymer or oligomer of feature d) is at least 5°C,
wherein the filler-interactive functional groups bring about an interaction of the polymer or oligomer with the filler surface via van der Waals, dipole-dipole or electrostatic interactions or via covalent or non-covalent bonds, for example hydrogen bonds.

2. Rubber mixture according to Claim 1, **characterized in that** it contains silica and/or carbon black as filler.

3. Rubber mixture according to Claim 1 or 2, **characterized in that** the polymer or oligomer of feature c) is a diene-based polymer or oligomer.

4. Rubber mixture according to any of Claims 1 to 3, **characterized in that** the polymer or oligomer of feature c) has a glass transition temperature T_{g} of < -20°C, especially of < -30°C.

5. Rubber mixture according to any of Claims 1 to 4, **characterized in that** the polymer or oligomer of feature c) is an average molar mass Mn (number-average molar mass by gel permeation chromatography) of 500 g/mol to 50 000 g/mol, especially of 1000 g/mol to 20 000 g/mol, more preferably of 3000 g/mol to 15 000 g/mol.

6. Rubber mixture according to any of Claims 1 to 5, **characterized in that** the polymer or oligomer of feature c) has been functionalized with a silyl protecting group.

7. Rubber mixture according to Claims 1 to 6, **characterized in that** the polymer or oligomer of feature c) is a polybutadiene functionalized with a filler-interactive functional group.

8. Rubber mixture according to any of Claims 1 to 7, **characterized in that** the polymer or oligomer of feature c) and/or the polymer or oligomer of feature d) has been functionalized with a silyl protecting group of the formula IV:
(R¹R²R³)Si- Formula IV
where
R¹, R², R³ are independently selected from the group of linear or branched alkoxy, cycloalkoxy, alkyl, cycloalkyl, aryl or hydroxyl groups, in each case having 1 to 20 carbon atoms, or hydrogen and
where the silyl protecting group of formula IV is attached directly or via a bridge to the polymer chain of the polymer or oligomer and
where the bridge is formed from a saturated or unsaturated hydrocarbyl radical that may contain heteroatoms, especially sulfur and/or nitrogen.

9. Rubber mixture according to any of Claims 1 to 8, **characterized in that** the polymer or oligomer of feature d) has been functionalized with a silyl protecting group of the formula V:
-[Zₖ-Xₙ-R⁴-(CH₂)ₘ-Si(R⁵)ₚ]_{q} Formula V
where
- Z is an aromatic or aliphatic group, optionally having one or more heteroatom(s),
- X is a linker containing sulfur and/or oxygen and/or nitrogen and/or a carbonyl group,
- R⁴ is one or more aliphatic groups having 1 to 18 carbon atoms and/or a connecting group to at least one heteroatom, especially to oxygen, nitrogen or sulfur,
- R⁵ is a branched or branched alkoxy, aryloxy, alkyl or aryl group having 1 to 18 carbon atoms, hydrogen or a hydroxyl group, where at least one R⁵ is an alkoxy or aryloxy group having 1 to 18 carbon atoms, a hydrogen atom or a hydroxyl group, where R⁵ is the same or different within the molecule,
- q is an integer ≥ 1,
- k is 0 or 1,
- n is an integer from 1 to 10,
- m is an integer from 0 to 10 and
- p is 1, 2 or 3.

10. Rubber mixture according to any of Claims 1 to 9, **characterized in that** the polymer or oligomer of feature d) is a resin based on unsaturated aliphatic monomers, unsaturated aromatic monomers, terpenes, rosin, unsaturated cycloaromatic monomers, unsaturated cycloaliphatic monomers, unsaturated fatty acids, methacrylates and/or vinylaromatic monomers.

11. Rubber mixture according to any of Claims 1 to 10, **characterized in that** the polymer or oligomer of feature d) has a molar mass (Mn) of 200 g/mol to 150 000 g/mol, preferably of 200 g/mol to 50 000 g/mol, more preferably of 200 g/mol to 30 000 g/mol.

12. Rubber mixture according to any of Claims 1 to 11, **characterized in that** the polymer or oligomer of feature c) and the polymer or oligomer of feature d) are present in a ratio of 1:50 to 50:1, especially of 1:10 to 10:1, preferably of 1:5 to 5:1, and more preferably of 1:3 to 3:1.

13. Rubber mixture according to any of Claims 1 to 12, **characterized in that** the temperature differential ΔT_{g} ascertained between the glass transition temperature T_{g} of the polymer or oligomer of feature c) and the glass transition temperature T_{g} of the polymer or oligomer of feature d) is at least 10°C.

14. Rubber mixture according to any of Claims 1 to 13, **characterized in that** it contains at least one silane coupling agent.

15. Pneumatic vehicle tyre including at least one tyre component consisting of rubber, especially a tread, that has been manufactured at least partly from a rubber mixture according to any of Claims 1 to 13.

## Revendications

1. Mélange de caoutchouc réticulable, contenant :
a) un caoutchouc diénique présentant une masse molaire moyenne Mn supérieure à 150.000 g/mole,
b) une charge,
c) un polymère ou un oligomère présentant une masse molaire moyenne Mn inférieure à 150.000 g/mole qui présente un groupe fonctionnel interagissant avec la charge et une température de transition vitreuse T_{g} < -15°C,
d) un polymère ou un oligomère présentant une masse molaire moyenne Mn inférieure à 150.000 g/mole qui présente un groupe fonctionnel interagissant avec la charge et une température de transition vitreuse Tg > -15°C,
la différence de température ΔT_{g} déterminée entre la température de transition vitreuse T_{g} du polymère ou de l'oligomère selon la caractéristique c) et la température de transition vitreuse T_{g} du polymère ou de l'oligomère selon la caractéristique d) étant d'au moins 5°C,
les groupes fonctionnels interagissant avec la charge provoquant une interaction du polymère ou de l'oligomère avec la surface de la charge par des interactions de Van der Waals, dipôle-dipôle ou électrostatiques ou par des liaisons covalentes ou, selon le cas, non covalentes, comme par exemple des liaisons de pont hydrogène.

2. Mélange de caoutchouc selon la revendication 1, **caractérisé en ce qu'**il contient, comme charge, de la silice et/ou de la suie.

3. Mélange de caoutchouc selon la revendication 1 ou 2, **caractérisé en ce que** le polymère ou l'oligomère selon la caractéristique c) est un polymère ou un oligomère à base de diène.

4. Mélange de caoutchouc selon l'une des revendications 1 à 3, **caractérisé en ce que** le polymère ou l'oligomère selon la caractéristique c) présente une température de transition vitreuse T_{g} < -20°C, en particulier < -30°C.

5. Mélange de caoutchouc selon l'une des revendications 1 à 4, **caractérisé en ce que** le polymère ou l'oligomère selon la caractéristique c) présente une masse molaire moyenne Mn (moyenne en nombre de la masse molaire par chromatographie par perméation de gel) de 500 g/mole à 50.000 g/mole, en particulier de 1000 g/mole à 20.000 g/mole, de manière particulièrement préférée de 3000 g/mole à 15.000 g/mole.

6. Mélange de caoutchouc selon l'une des revendications 1 à 5, **caractérisé en ce que** le polymère ou l'oligomère selon la caractéristique c) est fonctionnalisé par un groupe de protection silyle.

7. Mélange de caoutchouc selon les revendications 1 à 6, **caractérisé en ce que** le polymère ou l'oligomère selon la caractéristique c) est un polybutadiène fonctionnalisé par un groupe fonctionnel interagissant avec la charge.

8. Mélange de caoutchouc selon l'une des revendications 1 à 7, **caractérisé en ce que** le polymère ou l'oligomère selon la caractéristique c) et/ou le polymère ou l'oligomère selon la caractéristique d) est fonctionnalisé par un groupe de protection silyle de formule IV :
(R¹R²R³)Si- Formule IV
dans laquelle
R¹, R², R³ sont choisis, indépendamment les uns des autres, dans le groupe formé par les groupes, linéaires ou ramifiés, alcoxy, cycloalcoxy, alkyle, cycloalkyle, aryle ou hydroxy, comprenant à chaque fois 1 à 20 atomes de carbone, ou hydrogène et
le groupe de protection silyle selon la formule IV étant lié directement ou par l'intermédiaire d'un pont à la chaîne polymère du polymère ou, selon le cas, de l'oligomère et
le pont étant formé à partir d'un radical hydrocarboné saturé ou insaturé, qui peut contenir des hétéroatomes, en particulier du soufre et/ou de l'azote.

9. Mélange de caoutchouc selon l'une des revendications 1 à 8, **caractérisé en ce que** le polymère ou l'oligomère selon la caractéristique d) est fonctionnalisé par un groupe de protection silyle de formule V :
-[Zₖ-Xₙ-R⁴-(CH₂)ₘ-Si(R⁵)ₚ]_{q} Formule V
dans laquelle
- Z représente un groupe aromatique ou aliphatique, présentant le cas échéant un ou plusieurs hétéroatomes,
- X représente un lieur, contenant du soufre et/ou de l'oxygène et/ou de l'azote et/ou un groupe carbonyle,
- R⁴ représente un ou plusieurs groupes aliphatiques comprenant 1 à 18 atomes de carbone et/ou un groupe de liaison présentant au moins un hétéroatome, en particulier oxygène, azote ou soufre,
- R⁵ représente un groupe alcoxy, aryloxy, alkyle ou aryle, ramifié ou non ramifié, comprenant 1 à 18 atomes de carbone, hydrogène ou un groupe hydroxy, au moins un R⁵ représentant un groupe alcoxy ou aryloxy comprenant 1 à 18 atomes de carbone, un atome d'hydrogène ou un groupe hydroxy, R⁵ au sein d'une molécule étant identique ou différent,
- q représente un nombre entier ≥ 1,
- k représente 0 ou 1,
- n représente un nombre entier entre 1 et 10,
- m représente un nombre entier entre 0 et 10 et
- p représente 1, 2, ou 3.

10. Mélange de caoutchouc selon l'une des revendications 1 à 9, **caractérisé en ce que** le polymère ou l'oligomère selon la caractéristique d) est une résine qui est à base de monomères aliphatiques insaturés, de monomères aromatiques insaturés, de terpènes, de colophane, de monomères cycloaromatiques insaturés, de monomères cycloaliphatiques insaturés, d'acides gras insaturés, de méthacrylates et/ou de monomères aromatiques de vinyle.

11. Mélange de caoutchouc selon l'une des revendications 1 à 10, **caractérisé en ce que** le polymère ou l'oligomère selon la caractéristique d) présente une masse molaire (Mn) de 200 g/mole à 150.000 g/mole, de préférence de 200 g/mole à 50.000 g/mole, de manière particulièrement préférée de 200 g/mole à 30.000 g/mole.

12. Mélange de caoutchouc selon l'une des revendications 1 à 11, **caractérisé en ce que** le polymère ou l'oligomère selon la caractéristique c) et le polymère ou l'oligomère selon la caractéristique d) sont contenus dans un rapport de 1:50 à 50:1, en particulier de 1:10 à 10:1, de préférence de 1:5 à 5:1 et de manière particulièrement préférée de 1:3 à 3:1.

13. Mélange de caoutchouc selon l'une des revendications 1 à 12, **caractérisé en ce que** la différence de température ΔT_{g} déterminée entre la température de transition vitreuse T_{g} du polymère ou de l'oligomère selon la caractéristique c) et la température de transition vitreuse T_{g} du polymère ou de l'oligomère selon la caractéristique d) est d'au moins 10°C.

14. Mélange de caoutchouc selon l'une des revendications 1 à 13, **caractérisé en ce qu'**il contient au moins un agent de couplage au silane.

15. Pneumatique de véhicule qui présente au moins un composant de pneu constitué de caoutchouc, en particulier une bande de roulement, qui est fabriqué au moins en partie à partir d'un mélange de caoutchouc selon l'une des revendications 1 à 13.
